(19) Europäisches Patentamt
European Patent Office
Office européen des brevets

(11) EP 3 529 325 B1

(12) EUROPEAN PATENT SPECIFICATION

(45) Date of publication and mention of the grant of the patent:
**30.06.2021 Bulletin 2021/26**

(21) Application number: **17861672.8**

(22) Date of filing: **18.10.2017**

(51) Int Cl.:
***C09D 163/00** (2006.01)*
***C09D 167/00** (2006.01)*
***C09D 191/06** (2006.01)*
***C09D 133/06** (2006.01)*
***C09D 133/00** (2006.01)*
***C09D 177/00** (2006.01)*
***C08G 83/00** (2006.01)*

(86) International application number:
**PCT/US2017/057214**

(87) International publication number:
**WO 2018/075656 (26.04.2018 Gazette 2018/17)**

# (54) METHODS FOR PREPARATION OF FUNCTIONAL WATERBORNE DISPERSIONS

VERFAHREN ZUR HERSTELLUNG VON FUNKTIONELLEN WÄSSRIGEN DISPERSIONEN

PROCÉDÉS DE PRÉPARATION DE DISPERSIONS AQUEUSES FONCTIONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2016 US 201662411105 P**

(43) Date of publication of application:
**28.08.2019 Bulletin 2019/35**

(73) Proprietor: **BASF SE**
**67056 Ludwigshafen (DE)**

(72) Inventor: **SOLEIMANI, Mohsen**
**Grosse Ile**
**Michigan 48138 (US)**

(74) Representative: **BASF IP Association**
**BASF SE**
**G-FLP-C006**
**67056 Ludwigshafen (DE)**

(56) References cited:
**WO-A1-99/24510**
**US-A- 4 661 540**
**US-A1- 2008 289 539**
**US-A1- 2009 036 570**
**US-A1- 2014 275 362**
**US-A1- 2016 017 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD

In general, the present technology relates to the field of water-based polymer dispersions. More specifically, the present technology relates to the field of water-based polymer of acid functional resins, where the acid functional resins are at least partially neutralized with a functionalized amine and then reacted with an epoxy, and methods of making and using such materials.

### BACKGROUND

US 4 661 540 A discloses an aqueous dispersion of a tertiary amine terminated polyether and a carboxylic acid functional polymer. The tertiary amine terminated polyether is the product of the reaction of the epoxy group of an epoxy resin with the hydroxy group of a hydroxy functional tertiary amine and the carboxylic acid functional polymer is present in an amount sufficient to render the combination water dispersible. The reference also discloses process for producing the aqueous dispersion, together with coating compositions based on the dispersion.

### SUMMARY

In one aspect, a polymer dispersion is provided, the dispersion including a hyperbranched polymer, wherein the hyperbranched polymer includes the reaction product of a partially neutralized, acid-functional resin and an epoxy having a plurality of epoxy groups; wherein the partially neutralized, acid functional resin is the reaction product of an acid-functional resin and a functionalized amine, the hyperbranched polymer comprises a carboxyl group, a hydroxyl group, an amino group, a uredo group, an acetoacetoxy group, a diacetone group, or a combination of any two or more thereof, and the polymer dispersion is an aqueous, cross-linkable, polymer dispersion. The polymer dispersions are well-suited for use in a variety of coating applications; including inks, two-pack coating kits, ultraviolet (UV) curable coatings, baked coatings, and air dry coatings. The polymer dispersions are also useful as binders for printing inks and overprint varnishes used in graphic arts applications. In some embodiments, coating compositions including the polymer dispersion and a cross-linking agent are provided. The coating compositions may have a clear end of useable time indicator *(i.e.,* pot-life marker). In some embodiments, 2-pack coating kits include a first pack that contains the polymer dispersion and a second pack that contains a cross-linking agent. In any of the embodiments described herein, the hyperbranched polymer may be a partially cross-linked polymer, where the partial cross-linking is provided by an epoxy having a plurality of epoxy groups.

In another aspect, a method of producing the above polymer dispersions is provided, the method including: (a) reacting an acid-functional resin dispersed in water with at least a functionalized amine wherein an amino group of the functionalized amine reacts with an acid group of the acid-functional resin to produce a partially neutralized, acid-functional resin *(i.e.,* an intermediate dispersion); and (b) subsequently reacting such intermediate dispersions with at least an epoxy containing compound to produce a hyperbranched polymer *(i.e.,* a final dispersion), wherein the polymer dispersion is an aqueous, further cross-linkable, polymer dispersion. In some embodiments, the hyperbranched polymer may include a carboxyl, hydroxyl, amino, uredo, acetoacetoxy, or diacetone group, or a combination of any two or more thereof.

### BRIEF DESCRIPTION OF THE DRAWINGS

FIG. 1 illustrates the change in viscosity and pH of the 2-pack system as a function of time of a dispersion using ammonia (sample W), according to the examples.

FIG. 2 illustrates the change in viscosity and pH of the 2-pack system as a function of time of a dispersion using EtA (sample T), according to the examples.

FIG. 3 illustrates the change in viscosity and pH of the 2-pack system as a function of time of a dispersion using DEtA (sample U), according to the examples.

FIG. 4 illustrates the change in viscosity and pH of the 2-pack system as a function of time of a dispersion using MDEtA (sample V), according to the examples.

FIGs. 5A-5C illustrate the change in viscosity and pH of the 2-pack system as a function of time, according to sample Y (FIG. 5A), sample Z (FIG. 5B), and sample A1 (FIG. 5C).

FIG. 6 illustrates the change in viscosity and pH of the 2-pack system as a function of time, according to sample BB with PM acetate as a solvent. A triplicate was performed to assess reproducibility.

FIG. 7 is a graph comparison of the evolution of gloss as a function of time with varying solvents, according to sample ID and BB.

FIG. 8A is a graph comparison of solids content effect on pot-life, according to sample ID BB.

FIG. 8B illustrates gloss and MEK rub resistance for coating compositions during and after the open time in paint formulations, according to Example 6.

FIGs. 9A-9B illustrate the change in viscosity and pH of the 2-pack system as a function of time, according to sample AA (FIG. 9A) and sample BB (FIG. 9B).

FIG. 10A illustrates the change in viscosity and pH of the 2-pack system as a function of time according to samples BB, CC, and HH. FIG. 10B illustrates the effect of initial pH on viscosity and pH evolution of 2-pack systems prepared from sample HH when initial pH was low (8.2) and high (8.5).

FIGs. 11A-11C illustrates the change in viscosity and pH of the 2-pack system as a function of time according to sample ID II without surfactant (FIG. 11A), with 1 wt% nonionic surfactant (FIG. 11B), and 1 wt% ionic surfactant (FIG. 11C).

FIG. 12 illustrates the evolution of pH and viscosity over time for systems KK' and AA', according to the Examples.

FIGs. 13A, 13B, and 13C are graphs of gloss, Koenig hardness, and MEK double rubs, respectively, for clear coat formulations KK' and AA', according to the Examples.

FIG. 14 illustrates the evolution of pH and viscosity over time for systems A2' and LL', according to the Examples.

FIGs. 15A, 15B, and 15C are graphs of gloss, Koenig hardness, and MEK double rubs, respectively, for clear coat formulations A2' and LL', according to the Examples.

FIG. 16 are graphs of pH manipulation for A2' after activation with Part B in terms of viscosity and pH, according to the Examples.

## DETAILED DESCRIPTION

Various embodiments are described hereinafter. It should be noted that the specific embodiments are not intended as an exhaustive description or as a limitation to the broader aspects discussed herein. One aspect described in conjunction with a particular embodiment is not necessarily limited to that embodiment and may be practiced with any other embodiment(s).

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% or up to plus or minus 5% of the stated value.

As used herein, "functional groups" includes, but is not limited to, halides, alcohols, ethers, carbonyls (including aldehydes, ketones, and carboxyl groups), amines, amides, cyanos, ureas, thiols, and combinations of two or more thereof. In some embodiments, the functional groups may include one or more carboxyl, hydroxyl, amino, uredo, acetoacetoxy, or diacetone group, or mixtures of two or more thereof.

In general, as used herein, "substituted" refers to an alkyl, alkenyl, alkynyl, aryl, or ether group, as defined below (e.g., an alkyl group) in which one or more bonds to a hydrogen atom contained therein are replaced by a bond to non-hydrogen or non-carbon atoms. Substituted groups also include groups in which one or more bonds to a carbon(s) or hydrogen(s) atom are replaced by one or more bonds, including double or triple bonds, to a heteroatom. Thus, a substituted group will be substituted with one or more substituents, unless otherwise specified. In some embodiments, a substituted group is substituted with 1, 2, 3, 4, 5, or 6 substituents. Examples of substituent groups include: halogens

(i.e., F, Cl, Br, and I); hydroxyls; alkoxy, alkenoxy, alkynoxy, aryloxy, aralkyloxy, heterocyclyloxy, and heterocyclylalkoxy groups; carbonyls (oxo); carboxyls; esters; urethanes; oximes; hydroxylamines; alkoxyamines; aralkoxyamines; thiols; sulfides; sulfoxides; sulfones; sulfonyls; sulfonamides; amines; N-oxides; hydrazines; hydrazides; hydrazones; azides; amides; ureas; amidines; guanidines; enamines; imides; isocyanates; isothiocyanates; cyanates; thiocyanates; imines; nitro groups; nitriles (i.e., CN); and the like.

As used herein, "alkyl" groups include straight chain and branched alkyl groups having from 1 to about 20 carbon atoms, and typically from 1 to 12 carbons or, in some embodiments, from 1 to 8 carbon atoms. As employed herein, "alkyl groups" include cycloalkyl groups as defined below. Alkyl groups may be substituted or unsubstituted. Examples of straight chain alkyl groups include methyl, ethyl, n-propyl, n-butyl, n-pentyl, n-hexyl, n-heptyl, and n-octyl groups. Examples of branched alkyl groups include, but are not limited to, isopropyl, sec-butyl, t-butyl, neopentyl, and isopentyl groups. Representative substituted alkyl groups may be substituted one or more times with, for example, amino, thio, hydroxy, cyano, alkoxy, and/or halo groups such as F, Cl, Br, and I groups. As used herein the term haloalkyl is an alkyl group having one or more halo groups. In some embodiments, haloalkyl refers to a per-haloalkyl group.

Cycloalkyl groups are cyclic alkyl groups such as, but not limited to, cyclopropyl, cyclobutyl, cyclopentyl, cyclohexyl, cycloheptyl, and cyclooctyl groups. In some embodiments, the cycloalkyl group has 3 to 8 ring members, whereas in other embodiments the number of ring carbon atoms range from 3 to 5, 6, or 7. Cycloalkyl groups may be substituted or unsubstituted. Cycloalkyl groups further include polycyclic cycloalkyl groups such as, but not limited to, norbornyl, adamantyl, bornyl, camphenyl, isocamphenyl, and carenyl groups, and fused rings such as, but not limited to, decalinyl, and the like. Cycloalkyl groups also include rings that are substituted with straight or branched chain alkyl groups as defined above. Representative substituted cycloalkyl groups may be mono-substituted or substituted more than once, such as, but not limited to: 2,2-; 2,3-; 2,4-; 2,5-; or 2,6-disubstituted cyclohexyl groups or mono-, di-, or tri-substituted norbornyl or cycloheptyl groups, which may be substituted with, for example, alkyl, alkoxy, amino, thio, hydroxy, cyano, and/or halo groups.

As used herein, "aryl", or "aromatic," groups are cyclic aromatic hydrocarbons that do not contain heteroatoms. Aryl groups include monocyclic, bicyclic and polycyclic ring systems. Thus, aryl groups include, but are not limited to, phenyl, azulenyl, heptalenyl, biphenylenyl, indacenyl, fluorenyl, phenanthrenyl, triphenylenyl, pyrenyl, naphthacenyl, chrysenyl, biphenyl, anthracenyl, indenyl, indanyl, pentalenyl, and naphthyl groups. An aryl group with one or more alkyl groups may also be referred to as alkaryl groups. In some embodiments, aryl groups contain 6-14 carbons, and in others from 6 to 12 or even 6-10 carbon atoms in the ring portions of the groups. The phrase "aryl groups" includes groups containing fused rings, such as fused aromatic-aliphatic ring systems (e.g., indanyl, tetrahydronaphthyl, and the like). Aryl groups may be substituted or unsubstituted.

Heterocyclyl or heterocycle refers to both aromatic and nonaromatic ring compounds including monocyclic, bicyclic, and polycyclic ring compounds containing 3 or more ring members of which one or more is a heteroatom such as, but not limited to, N, O, and S. Examples of heterocyclyl groups include, but are not limited to: unsaturated 3 to 8 membered rings containing 1 to 4 nitrogen atoms such as, but not limited to pyrrolyl, pyrrolinyl, imidazolyl, pyrazolyl, pyridinyl, dihydropyridinyl, pyrimidinyl, pyrazinyl, pyridazinyl, triazolyl *(e.g.* 4H-1,2,4-triazolyl, 1H-1,2,3-triazolyl, 2H-1,2,3-triazolyl etc.), tetrazolyl, *(e.g.* 1H-tetrazolyl, 2H tetrazolyl, etc.); saturated 3 to 8 membered rings containing 1 to 4 nitrogen atoms such as, but not limited to, pyrrolidinyl, imidazolidinyl, piperidinyl, piperazinyl; condensed unsaturated heterocyclic groups containing 1 to 4 nitrogen atoms such as, but not limited to, indolyl, isoindolyl, indolinyl, indolizinyl, benzimidazolyl, quinolyl, isoquinolyl, indazolyl, benzotriazolyl; unsaturated 3 to 8 membered rings containing 1 to 2 oxygen atoms and 1 to 3 nitrogen atoms such as, but not limited to, oxazolyl, isoxazolyl, oxadiazolyl (e.g. 1,2,4-oxadiazolyl, 1,3,4-oxadiazolyl, 1,2,5-oxadiazolyl, etc.); saturated 3 to 8 membered rings containing 1 to 2 oxygen atoms and 1 to 3 nitrogen atoms such as, but not limited to, morpholinyl; unsaturated condensed heterocyclic groups containing 1 to 2 oxygen atoms and 1 to 3 nitrogen atoms, for example, benzoxazolyl, benzoxadiazolyl, benzoxazinyl *(e.g.* 2H-1,4-benzoxazinyl etc.); unsaturated 3 to 8 membered rings containing 1 to 3 sulfur atoms and 1 to 3 nitrogen atoms such as, but not limited to, thiazolyl, isothiazolyl, thiadiazolyl (e.g. 1,2,3-thiadiazolyl, 1,2,4-thiadiazolyl, 1,3,4-thiadiazolyl, 1,2,5-thiadiazolyl, etc.); saturated 3 to 8 membered rings containing 1 to 2 sulfur atoms and 1 to 3 nitrogen atoms such as, but not limited to, thiazolodinyl; saturated and unsaturated 3 to 8 membered rings containing 1 to 2 sulfur atoms such as, but not limited to, thienyl, dihydrodithiinyl, dihydrodithionyl, tetrahydrothiophene, tetrahydrothiopyran; unsaturated condensed heterocyclic rings containing 1 to 2 sulfur atoms and 1 to 3 nitrogen atoms such as, but not limited to, benzothiazolyl, benzothiadiazolyl, benzothiazinyl (e.g. 2H-1,4-benzothiazinyl, etc.), dihydrobenzothiazinyl *(e.g.* 2H-3,4-dihydrobenzothiazinyl, etc.), unsaturated 3 to 8 membered rings containing oxygen atoms such as, but not limited to furyl; unsaturated condensed heterocyclic rings containing 1 to 2 oxygen atoms such as benzodioxolyl *(e.g.,* 1,3-benzodioxoyl, etc.); unsaturated 3 to 8 membered rings containing an oxygen atom and 1 to 2 sulfur atoms such as, but not limited to, dihydrooxathiinyl; saturated 3 to 8 membered rings containing 1 to 2 oxygen atoms and 1 to 2 sulfur atoms such as 1,4-oxathiane; unsaturated condensed rings containing 1 to 2 sulfur atoms such as benzothienyl, benzodithiinyl; and unsaturated condensed heterocyclic rings containing an oxygen atom and 1 to 2 oxygen atoms such as benzoxathiinyl. Heterocyclyl group also include those described above in which one or more S atoms in the ring is double-bonded to one or two

oxygen atoms (sulfoxides and sulfones). For example, heterocyclyl groups include tetrahydrothiophene oxide and tetrahydrothiophene 1,1-dioxide. Typical heterocyclyl groups contain 5 or 6 ring members. Thus, for example, heterocyclyl groups include morpholinyl, piperazinyl, piperidinyl, pyrrolidinyl, imidazolyl, pyrazolyl, 1,2,3-triazolyl, 1,2,4-triazolyl, tetrazolyl, thiophenyl, thiomorpholinyl, thiomorpholinyl in which the S atom of the thiomorpholinyl is bonded to one or more O atoms, pyrrolyl, pyridinyl homopiperazinyl, oxazolidin-2-onyl, pyrrolidin-2-onyl, oxazolyl, quinuclidinyl, thiazolyl, isoxazolyl, furanyl, dibenzylfuranyl, and tetrahydrofuranyl. Heterocyclyl or heterocycles may be substituted.

Heteroaryl groups are aromatic ring compounds containing 5 or more ring members, of which, one or more is a heteroatom such as, but not limited to, N, O, and S. Heteroaryl groups include, but are not limited to, groups such as pyrrolyl, pyrazolyl, triazolyl, tetrazolyl, oxazolyl, isoxazolyl, thiazolyl, pyridinyl, pyridazinyl, pyrimidinyl, pyrazinyl, thiophenyl, benzothiophenyl, furanyl, benzofuranyl, dibenzofuranyl, indolyl, azaindolyl (pyrrolopyridinyl), indazolyl, benzimidazolyl, imidazopyridinyl (azabenzimidazolyl), pyrazolopyridinyl, triazolopyridinyl, benzotriazolyl, benzoxazolyl, benzothiazolyl, benzothiadiazolyl, imidazopyridinyl, isoxazolopyridinyl, thianaphthyl, purinyl, xanthinyl, adeninyl, guaninyl, quinolinyl, isoquinolinyl, tetrahydroquinolinyl, quinoxalinyl, and quinazolinyl groups. Heteroaryl groups include fused ring compounds in which all rings are aromatic such as indolyl groups and include fused ring compounds in which only one of the rings is aromatic, such as 2,3-dihydro indolyl groups. Although the phrase "heteroaryl groups" includes fused ring compounds, the phrase does not include heteroaryl groups that have other groups bonded to one of the ring members, such as alkyl groups. Rather, heteroaryl groups with such substitution are referred to as "substituted heteroaryl groups." Representative substituted heteroaryl groups may be substituted one or more times with various substituents such as those listed above.

Aralkyl groups are alkyl groups as defined above in which a hydrogen or carbon bond of an alkyl group is replaced with a bond to an aryl group as defined above. In some embodiments, aralkyl groups contain 7 to 16 carbon atoms, 7 to 14 carbon atoms, or 7 to 10 carbon atoms. Aralkyl groups may be substituted or unsubstituted. Substituted aralkyl groups may be substituted at the alkyl, the aryl or both the alkyl and aryl portions of the group. Representative aralkyl groups include but are not limited to benzyl and phenethyl groups and fused (cycloalkylaryl)alkyl groups such as 4-indanylethyl. Representative substituted aralkyl groups may be substituted one or more times with substituents such as those listed above.

The term "carboxyl" or "carboxylate" as used herein refers to a -C(O)OH group or to its ionized form, -C(O)O-.

The term "ester" as used herein refers to $-C(O)OR^{60}$ groups. $R^{60}$ is a substituted or unsubstituted alkyl, cycloalkyl, alkenyl, alkynyl, aryl, aralkyl, heterocyclylalkyl or heterocyclyl group as defined herein.

The term "guanidine" refers to $-NR^{80}C(NR^{81})NR^{82}R^{83}$, wherein $R^{80}$, $R^{81}$, $R^{82}$ and $R^{83}$ are each independently hydrogen, or a substituted or unsubstituted alkyl, cycloalkyl, alkenyl, alkynyl, aryl aralkyl, heterocyclyl or heterocyclylalkyl group as defined herein.

The term "hydroxyl' as used herein can refer to -OH or its ionized form, -O-.

The term "amine" (or "amino") as used herein refers to $-NR^{65}R^{66}$ groups, wherein $R^{65}$ and $R^{66}$ are independently hydrogen, or a substituted or unsubstituted alkyl, alkenyl, alkynyl, cycloalkyl, aryl, aralkyl, heterocyclylalkyl or heterocyclyl group as defined herein. In some embodiments, the amine is alkylamino, dialkylamino, arylamino, or alkylarylamino.

The term "thiol" refers to -SH groups, while sulfides include $-SR^{70}$ groups, sulfoxides include $-S(O)R^{71}$ groups, sulfones include $-SO_2R^{72}$ groups, and sulfonyls include $-SO_2OR^{73}$. $R^{70}$, $R^{71}$, $R^{72}$, and $R^{73}$ are each independently a substituted or unsubstituted alkyl, cycloalkyl, alkenyl, alkynyl, aryl aralkyl, heterocyclyl or heterocyclylalkyl group as defined herein. In some embodiments the sulfide is an alkylthio group, -S-alkyl.

As used herein, the term "partially cross-linked polymer" is intended to refer to a polymer that contains a hyperbranched polymer that may be partially gelled but which has functional groups that are amenable to further cross-linking in the presence of an additional cross-linker in a 2-pack formulation.

As used herein, the term "hyperbranched polymer" refers to a polymer having a main polymer chain and at least two branching points along the main polymer chain that may also themselves have further branching points.

As used herein, the term "pot-life" is intended to refer to the useable lifetime of a material before useful attributes are lost beyond an acceptable level dictated by the application. The term "pot-life marker" refers to an increase in viscosity, due to cross-linking, of the combined 2-pack system which signals the end of useable pot-life. The term may be applied to the polymer dispersions described herein, or it may apply to any product *(i.e.* paint, ink, or other coating) that incorporates the polymer dispersion. Pot-life may be expressed in terms of time or viscosity changes. When expressed in terms of viscosity, it will be understood that as long as the material maintains a viscosity range in which the material is able to be manipulated in an intended manner, the material still has useable pot-life. A subclass of polymer compositions described herein provides a discernible end of pot-life marker via an increase in the viscosity of the paint when combined with a hardener *(i.e.* an additional cross-linker such as an isocyanate, melamine, aziridine, or carbodiimide). In such dispersions, the particles react to changes in condition of the dispersion caused by hardener addition (for instance a drop in pH) via a flocculation mechanism. This way, a network of polymer particles and/or water phase polymer is formed that may contribute to the viscosity of the system and signals the end of usable pot-life. The practical implications of pot-life and the end of pot-life marker include the ability to apply the compositions by brush, spray, etc. to obtain acceptable

coatings and have an indication of when the "paint goes bad."

As used herein, the term "partially neutralized" is intended to refer to neutralization of about 5 mol% or more, up to an including about 95%, of the acid groups on the acid-functional resin. However, in some embodiments, partial neutralization refers to neutralization of from about 20 mol% to about 95 mol% of the acid groups. This may include in various embodiments at least about 5 mol% of the acid groups, at least about 10 mol% of the acid groups, from about 10 mol% to about 95 mol% of the acid groups, from about 8 mol% to about 85 mol% of the acid groups, or from about 15 mol% to about 50 mol% of the acid groups. In some embodiments, about 30 mol% of the acid groups on the acid-functional resin may be neutralized.

The present disclosure is directed to highly functional, stable dispersions dispersion of epoxyacrylate polymers. A high solids dispersion is prepared by partially neutralizing an acid functional polymer with a functional amine to form an intermediate dispersion, which in turn is then subjected to reaction with an epoxy compound to produce the final dispersion. An oligomeric or polymeric epoxy will result in at least some partial cross-linking of the stable dispersion. The stable dispersions are then amenable to further cross-linking with additional cross-linking material such as, but not limited to, isocyanates, carbodiimides, aziridines, melamines, or a mixture of any two or more thereof. In other words, the dispersions may be used in 2-pack coatings, where the first pack is the cross-linkable dispersion, and the second pack is the isocyanate, carbodiimide, aziridine, melamine, or mixture of any two or more thereof.

"Stable dispersions" are known to the one skilled in the art. The physiochemical properties of a stable dispersion remain unchanged upon storage for an elongated period of time. More precisely, in a stable dispersion the level of coagulum does not increase over 6 month upon storage on the shelf. Coagulum levels can be evaluated by filtering the dispersion through a 150-micrometer filter and measuring the solids content. This way, for a storage stable dispersion the difference is solids content before and after storage is expected to be low, lower than 1 wt%, more preferably below 0.5 wt% and most preferably below 0.25 wt%.

In some embodiments of the dispersions, a coating formulation prepared with the dispersion may, thus have, an epoxy network, a urea/urethane network, and an ionic cross-linked network. The hydrophobicity and basicity of the amine provides additional control over the pH stability of the dispersion. This finding has important consequences in tuning pot-life of a 2-pack waterborne coating with isocyanates, or any of the other materials. In solvent-borne 2-pack systems, addition of a cross-linker initiates the molecular weight build up reactions that lead to an increase in viscosity. At some point after the two packs are mixed, the viscosity reaches such a point that coating with the material is no longer feasible. This is the end of the "pot-life" of the compositions. In the present application, the water borne dispersions exhibit an end of pot-life signal that is visually discernible by a user of the material, through a noticeable viscosity increase.

It has been found that the functionalized amines used in the polymer dispersions impart a tunable end of pot-life marker, compared to polymer dispersions without the functionalized amine. Moreover, the dispersions exhibit lower minimum film formation temperature (MFFT) when compared to the adducts without the functional amine. Upon addition of a hardener, the amine participates in the reaction with the hardener and contributes to the formation of the crosslinked network. Therefore, it adds to properties such as hardness and chemical resistance. The dispersions may be formulated with a range of functionalities and solids content that make them well-suited for use in a variety of coatings including, but not limited to, 2-pack coatings, ultraviolet (UV) or peroxide-curable coatings, baked, and air-dry coatings.

The present technology relates to aqueous polymer dispersions and methods of making the same. The polymer dispersion includes hyperbranched polymer that includes an acid-functional resin, a functionalized amine, and an epoxy, wherein the polymer dispersion is an aqueous, cross-linkable, polymer dispersion. The hyperbranched polymers include carboxyl, hydroxyl, amino, uredo, acetoacetoxy, or diacetone moieties, or a combination of any two or more thereof. During formation of the aqueous polymer dispersions, acid groups on the acid-functional resin are at least partially neutralized by the functionalized amine, and are then reacted with the epoxy to form a hyperbranched polymer. Typically, the acid groups on the acid-functional resin are at least partially neutralized before bonding to the epoxy. The epoxy may be a mono-epoxy or the epoxy may have a plurality of epoxy groups. As used herein, "plurality" is two or more.

In some embodiments, the partially neutralized, acid-functional resin may be further neutralized by a base that is different from the functionalized amine. Suitable bases may include, but are not limited to, ammonium hydroxide, alkali metal hydroxides, alkaline earth hydroxides, alkali metal oxides, alkaline earth oxides, ammonia, or a mixture of any two or more thereof. In any of the above embodiments, the base may be ammonia.

The acid-functional resin may include an acid-functional acrylic resin, acid-functional styrene-acrylic resin, a non-acrylic acid functional resin, a hybrid acrylic acid-functional resin, acid functional polyester, acid functional polyamide, acid functional wax, or hybrid thereof. In addition to the acid functionality, the acid-functional resin may also include one or more additional functional groups such as groups capable of reacting with a cross-linking agent. In some embodiments, the acid-functional resin may include one or more additional functional groups capable of reacting with an isocyanate, a carbodiimide, aziridine, or melamine cross-linking agent. Illustrative additional functional groups include, but are not limited to, hydroxyl, amino, uredo, acetoacetoxy, or diacetone groups, or polymers having a mixture of any two or more such groups. In some embodiments, the one or more additional functional groups include hydroxyl groups.

The hyperbranched polymer may include, in some embodiments, about 50 wt% to about 99.5 wt% of the acid-functional resin. In some embodiments, the hyperbranched polymer may include about 60 wt% to about 95 wt% of the acid-functional resin. In some embodiments, the hyperbranched polymer may include about 70 wt% to about 90 wt% of the acid-functional resin. In some embodiments, the hyperbranched polymer may include about 60 wt% to about 95 wt% of the acid-functional resin. In some embodiments, the hyperbranched polymer may include about 75 wt% to about 99.5 wt% of the acid-functional resin. In some embodiments, the hyperbranched polymer may include about 70 wt% to about 90 wt% of the acid-functional resin. In some embodiments, the hyperbranched polymer may include about 75 wt% to about 95 wt% of the acid-functional resin. In some embodiments, the acid-functional resin may include any of the acid-functional resins of U.S. Patent Nos. 6,194,510; 4,529,787; and 4,546,160.

The acid groups on the acid-functional resin may be at least partially neutralized and bonded to the epoxy to form a hyperbranched polymer. The acid groups on the acid-functional resin must beat least partially neutralized before bonding to the epoxy. For example, the acid-functional resin may be electrostatically bonded to the amino group of the functionalized amine to form an at least partially neutralized, acid-functional resin dispersion *(i.e.,* an intermediate dispersion in the process). In turn, the at least partially neutralized, acid-functional resin may be covalently bonded to the epoxy to form the hyperbranched polymer *(i.e.,* the final dispersion of the process).

The acid-functional resin may have an acid value sufficient to allow for reaction with the epoxy. Illustrative acid values may include, but are not limited to, about 20 to about 300. This may include, but is not limited to, acid values of about 25 to about 250, about 35 to about 200, about 35 to 100, or about 50 to 100.

The at least partially neutralized, acid-functional resin *(i.e.,* the intermediate dispersion) may be reacted with the epoxy to form the hyperbranched polymer *(i.e.,* final dispersion). In some embodiments, up to about 95 mol% of the acid groups on the at least partially neutralized, acid-functional resin may be reacted with the epoxy. In some embodiments, at least about 5 mol% to about 95 mol% of the acid groups on the at least partially neutralized, acid-functional resin may be reacted with an epoxy. This includes from about 20 mol% to about 90 mol%, or from about 40 mol% to about 85 mol% of the acid groups on the at least partially neutralized, acid-functional resin may be reacted with epoxy.

In some embodiments, the hyperbranched polymer is partially crosslinked and contains a gel fraction. The hyperbranched polymer may have a gel content and a sol content *(i.e.* the soluble fraction of the polymer). The gel content may range from about 5-95 wt%. This range includes about 15-85 wt% and about 30-80 wt%. The partially cross-linked polymer may have a sol number average molecular weight of about 0.5-80 kDa. This includes about 1-10 kDa and about 1.5-5 kDa. The gel and sol content may be determined as set forth in "Polymer Chemistry, 2$^{nd}$ Edition" by P. Hiemenz and T. P. Lodge, Chapter 10, Networks, Gels And Rubber Elasticity.

In some embodiments, the epoxy may include an epoxy-functional material that is a monomer, oligomer, or polymer. The epoxy-functional material may, therefore, have at least one epoxy group, at least two epoxy groups, or more epoxy groups. In some embodiments, the epoxy may include an epoxy-functional polymer. The epoxy-functional polymer may include a polyepoxy-functional polymer, a monoepoxy-functional polymer, or a combination thereof. In some embodiments, the epoxy-functional polymer includes a polyepoxy-functional polymer. In some embodiments, the cross-linkable polymer is a partially cross-linked polymer or hyperbranched polymer. In some embodiments, the epoxy-functional polymer may include a combination of the polyepoxy-functional polymer and the monoepoxy-functional polymer.

The epoxy may include from about 0.5 wt% to about 85 wt% of the hyperbranched polymer. In some such embodiments, the epoxy may include from about 1 wt% to about 55 wt% of the hyperbranched polymer.

The epoxy-functional polymer may include a monoepoxy-functional polymer, or a mixture of a monoepoxy-functional polymer and a polyepoxyfunctional polymer. In some embodiments, the epoxy-functional polymer may include about 10 mol% to about 85 mol% of the monoepoxy-functional polymer. In some embodiments, the epoxy-functional polymer may include about 25 mol% to about 75 mol% of the monoepoxy-functional polymer. In some embodiments, the hyperbranched polymer may include about 1 wt% to about 85 wt% of the monoepoxy-functional polymer. In some embodiments, the hyperbranched polymer may include about 3 wt% to about 40 wt% of the monoepoxy-functional polymer. In some embodiments, the hyperbranched polymer may include about 4 wt% to about 6 wt% of the monoepoxy-functional polymer.

In other embodiments, the hyperbranched polymer may include about 1 wt% to about 85 wt% of a polyfunctional epoxy material such as a diglycidyl ethers, diglycidyl esters, etc.. In some embodiments, the hyperbranched polymer may include about 3 wt% to about 40 wt% of the polyepoxy-functional polymer. In some embodiments, the hyperbranched polymer may include about 4 wt% to about 6 wt% of the polyepoxy-functional polymer.

In some embodiments, the polyepoxy-functional polymer may be reacted with the at least partially neutralized, acid-functional resin before being reacted with the monoepoxy-functional polymer. In other embodiments, the monoepoxy-functional polymer may be reacted with an at least partially neutralized, acid-functional resin before being reacted with the polyepoxy-functional polymer; or the monoepoxy-functional polymer and the polyepoxy-functional polymer may be reacted with the at least partially neutralized, acid-functional resin simultaneously. As used herein, polyepoxy-functional polymers have at least two epoxy groups

In some embodiments, the mono- or polyepoxy-functional polymer may have an epoxy equivalent weight of

about 100 to 1000 g/mol. This may include epoxy equivalent weights of about 100 to about 500 or from about 100 to about 350. In some embodiments, the mono- or polyepoxy-functional polymer may have a number average molecular weight of about 200 to about 10000. In some embodiments, the mono- or polyepoxy-functional polymer may have a weight average molecular weight of about 250 to about 2000. However, polymers having properties outside these ranges may also be used.

The polyepoxy-functional polymer may include, but is not limited to, diepoxy polymers, polyepoxy-functional polymers, and mixtures of any two or more thereof. The polyepoxy-functional polymer may include a diglycidyl ester polymer, a glycidyl amine polymer, diglycidyl ether polymer, or a mixture of any two or more thereof. The polyepoxy-functional polymer may include a cyclohexanedimethanol diglycidyl ether polymer, a polypropylene oxide diglycidyl ether polymer, a bisphenol A diglycidyl ether polymer, a bisphenol F diglycidyl ether polymer, or a mixture of any two or more thereof. In some embodiments, the polyepoxy-functional polymer may include bisphenol F diglycidyl ether polymer.

The monoepoxy-functional polymer may be mono-functional having only a single epoxy functional group per polymer, or it may be monoepoxy functional but include other functionality as well. For example, the monoepoxy-functional polymer may include one or more hydroxyl groups. The monoepoxy-functional polymer may include a glycidyl ether polymer, a glycidyl ester polymer, a glycidyl amine polymer, a glycidyl ester polymer, or a mixture of any two or more thereof. In some embodiments, the monoepoxy-functional polymer may include a glycidyl methacrylate, a glycidyl ester of neodecanoic acid, a biphenol A monoglycidyl ether, a 2-ethylhexyl glycidyl ether, a glycidoxy propyl trimethoxy silane, or a mixture of any two or more thereof. In some embodiments, the monoepoxy-functional polymer may include $C_{12}$-$C_{14}$ glycidyl ether polymer.

In some embodiments, the epoxy-functional resin may include bisphenol F diglycidyl ether polymer, $C_{12}$-$C_{14}$ glycidyl ether polymer, or combinations thereof. In some embodiments, the hyperbranched polymer may include about 3 wt% to about 10 wt% bisphenol F diglycidyl ether polymer and about 3 wt% to about 15 wt% $C_{12}$-$C_{14}$ glycidyl ether polymer. In some embodiments, the hyperbranched polymer may include about 4 wt% to about wt% bisphenol F diglycidyl ether polymer and about 4 wt% to about 6 wt% $C_{12}$-$C_{14}$ glycidyl ether polymer.

In some embodiments, the functionalized amine may include a hydroxyl, cyano, carboxyl, nitro, imidazole, benzyl and substituted benzyls, cyclohexyl and substituted cyclohexyls, or heteroaryl group, or a combination of any two or more thereof. For example, the functionalized amines may include cyano, nitro, imidazole groups, or a combination of any two or more thereof. In some embodiments, the functionalized amines may include a hydroxyl group, carboxyl group, or combinations thereof. In some embodiments, the functionalized amine may include a primary or secondary hydroxyl group. The functionalized amine may be non-volatile or less volatile than ammonia. In some embodiments, the functionalized amine may be an alkanol amine. Alkanol amines may help decrease the Minimum Film Forming Temperature ("MFFT") of compositions that include the hyperbranched polymer. In some embodiments, alkanol amines decrease the MFFT without having a negative impact on hardness of the resulting cross-linked polymer. MFFT may be measured according to ASTM D2354.

The functionalized amine may include one or more compounds represented by Formula I, Formula II, or Formula III:

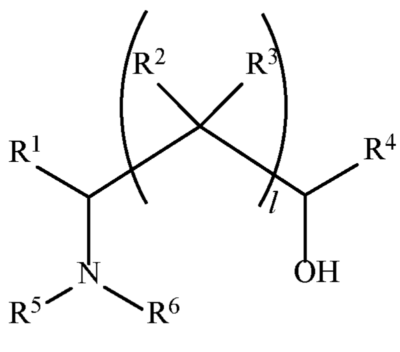

Formula I

;

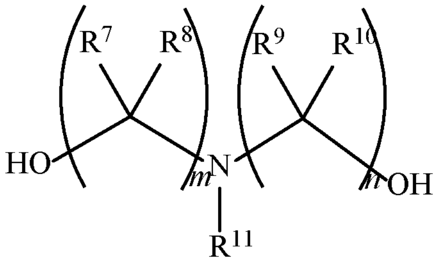

Formula II

;

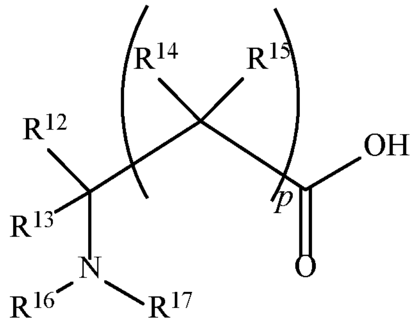

Formula III

;

wherein: $R^1$, $R^2$, $R^3$, $R^4$, $R^5$, $R^6$, $R^7$, $R^8$, $R^9$, $R^{10}$, and $R^{11}$ are each independently a hydrogen or $C_1$-$C_6$ alkyl group; $R^{12}$, $R^{13}$, $R^{14}$, $R^{15}$, $R^{16}$, and $R^{17}$, are each independently a hydrogen, hydroxyl, halo, carboxyl, amido, ester, thiol, alkylthio, guanadino, or a $C_1$-$C_6$ alkyl, $C_3$-$C_{10}$ cycloalkyl, $C_3$-$C_{10}$ heterocycloalkyl, $C_5$-$C_{12}$ aryl, or $C_5$-$C_{12}$ heteroaryl group; *l* and *p* are each independently 0, 1, 2, 3, 4, or 5; and *m* and *n* are each independently 1, 2, 3, 4, or 5. In some embodiments, $R^{11}$ is $C_1$-$C_6$ alkyl group substituted with one or more hydroxyl groups. In some embodiments, the functionalized amine ethanolamine, triethanolamine, 3-amino-1-propanol, amino-2-propanol, 4-amino-1-butanol, 3-amino-1-butanol, 2-amino-1-butanol, 5-amino-1-pentanol, methyldiethanolamine, dimethylethanolamine, or a combination of any two or more thereof. In some embodiments, the functionalized amine is ethanolamine, methyldiethanolamine, dimethylethanolamine, or a combination of any two or more thereof. In some embodiments, the functionalized amine is methyldiethanolamine, triethanolamine, or a combination thereof. In some embodiments, the hyperbranched polymer may include 0 to about 10 wt%, or greater than 0 wt% up to about 10 wt%, methyldiethanolamine and 0 to about 10 wt%, or greater than 0 wt% up to about 10 wt% triethanolamine. In some embodiments, the hyperbranched polymer may include about 3 wt% to about 6 wt% of methyldiethanolamine.

The functionalized amine may be selected to contribute to the final properties of the cross-linked polymer and coatings comprising the cross-linked polymer. For example, the functionalized amine may impart improved chemical or corrosion resistance to products that incorporate the cross-linked polymer, compared to those that lack the functionalized amine but otherwise are made of a similar composition. The functionalized amine may be used to adjust the hydroxyl value of the polymer dispersion and/or tune the colloidal stability of the polymer dispersion. In addition, the functionalized amine may help tune the open time *(i.e.* the useable time of a 2-pack system after mixing but before the end of the pot-life) of the 2-pack system as will be discussed later.

Once the 2-pack system is mixed, that is to say that once the aqueous dispersion is mixed with the cross-linking agent such as an isocyanate, the system starts to undergo a change in condition such as a drop in pH in the case of isocyanate. The pH decrease is believed to be due to the reaction of, *e.g.,* an isocyanate and water that produces an acid side product. The hardener reacts both with water and with the functional groups on the hyperbranched polymer. The loss of properties occur due to reaction of the crosslinker with functional groups of the polymer in the pot and prior to application. At the extreme, such reactions can prevent formation of a coherent film with desired properties on the substrate. The dispersions disclosed here may react to a change on condition (such as a drop in pH) in a way that results in an increase in viscosity.

As the pH of the system decreases, the dispersion may become destabilized, flocculate, and/or increase in viscosity, which is a physical manifestation of the breakdown in colloidal stability. As such, a decrease in pH and/or the increase in viscosity, may be used as an end of pot-life marker. The increase in viscosity may occur between pH of 8 to 5; 7-5 or 6.8 to 5.5. The decrease in pH occurs gradually over time following the addition of a cross-linking agent to the polymer dispersion. However, once the decrease in pH has occurred, the viscosity may quickly increase. In some embodiments, the viscosity may increase about 500; about 1000; about 2000; about 3000, about 5000, about 6000, or about 10,000 centipoise ("cps"). The specific endpoint, or end of pot-life marker will depend upon the application and the starting viscosity. According to some embodiments, the viscosity may double, triple, or increase by an order of magnitude upon reaching the end of the pot-life. For example, this may be measured as an increase of at least about 500 or 1000 cps. In some embodiments, the viscosity increase may occur 60, 100, 120, 150, or 180, 240, 480 minutes. In some embodiments, the increase in viscosity may occur over about 50, 40, 30, 20, 15, or 10 minutes. The time at which the viscosity increase happens is tunable depending on the specific needs of the application.

In some embodiments, the acid-functional resin may be prepared from one or more polymerized monomers including: a styrenic monomer; a monomer selected from the group consisting of formula V, maleic anhydride, and itaconic acid or esters thereof; or a combination of any two or more thereof;

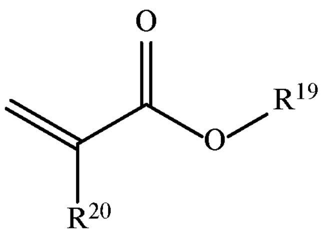

Formula V

;

wherein: $R^{18}$ and $R^{20}$ are each independently hydrogen or $CH_3$; and $R^{19}$ is a hydrogen, alkyl, cycloalkyl, aryl, or alkaryl group. In some embodiments, $R^{19}$ is a $C_1$-$C_{20}$ alkyl, $C_3$-$C_{20}$ cycloalkyl, $C_5$-$C_{12}$ aryl, or $C_5$-$C_{20}$ alkaryl group. Styrenic monomers include, but are not limited to, styrene and α-methyl styrene.

The acid-functional resin may be prepared from: one or more polymerized monomers such as acrylic acid or esters thereof, methacrylic acid or esters thereof, maleic anhydride, itaconic acid or esters thereof; and one or more monomers such as 2-hydroxyethyl acrylate, 2-hydroxyethyl methacrylate, 2,3-hydroxypropyl acrylate, 2,3-hydroxypropyl methacrylate, 2,4- hydroxybutyl acrylate, 2,4-hydroxybutyl methacrylates, methyl acrylate, ethyl acrylate, n-propyl acrylate, iso-propyl acrylate, n-butyl acrylate, n-butyl acrylate, iso-butyl acrylate, t-butyl acrylate, n-amyl acrylate, iso-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butylmethacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, isobornyl methacrylate, α-methyl styrene, styrene, or a combination of any two or more thereof. In some embodiments, the acid-functional resin may be prepared from: one or more polymerized monomers of acrylic acid or esters thereof and methacrylic acid or esters thereof; and one or more monomers of butyl acrylate, methyl methacrylate, styrene, or a combination of any two or more thereof. In some embodiments, the acid-functional resin may be prepared from acrylic acid or an ester thereof, methacrylic acid or an ester thereof, or a mixture of any two or more such monomers; and butyl acrylate, methyl methacrylate, styrene, or a mixture of any two or more such monomers. In some embodiments, the acid-functional resin may be prepared from acrylic acid, butyl acrylate, methyl methyacrylate, and styrene.

The molecular weights of the acid-functional resins may be adjusted depending on the end use and they may be of a very wide range. For example, the acid-functional resin may have a number average molecular weight ($M_n$) of about 1000 to about 100,000. This may include $M_n$ of about 2500 to about 20,000. The acid-functional resin may have a weight average molecular weight ($M_w$) of about 2000 to about 1,000,000. This may include $M_w$ of about 8000 to about 300,000. The acid-functional resin may have an acid value of about 25 to about 300. This may include acid values from about 50 to about 150. In some embodiments, the acid-functional resin may have a hydroxyl value of 0 to about 250 mg KOH/ g *(i.e.,)*. In some embodiments, the acid-functional resin may have a hydroxyl value of about 0 to about 50. In some embodiments, the acid-functional resin may have number average molecular weights ($M_n$) of about 1000 to about 10,000; an acid value of about 25 to about 300; and a hydroxyl value of about 0 to about 250. The acid-functional resin may have a glass transition temperature ($T_g$) of about -55 °C to about 200 °C. This may include a $T_g$ of about 0 °C to about 120 °C and about 50 °C to about 90 °C. In some embodiments, the acid-functional resin may have a $M_n$ of about 4000 to about 6000, a $M_w$ of about 14,000 to about 17,000, a Tg of about 73 °C to about 78 °C, and an acid value of about 70 to about 80. However, acid-functional resins having properties outside these ranges may also be employed, provided they are water-dispersible and able to react with epoxy resins. In some embodiments, the acid-functional resin may include one or more styrenic (meth)acrylic oligomers.

The resins may be prepared by emulsion polymerization, chain-transfer emulsion polymerization; bulk, solution, or suspension polymerization; or via a continuous, high-temperature polymerization process. In some embodiments, the acid-functional resin may be produced by emulsion polymerization. In some embodiments, the acid-functional resin may be produced by bulk, solution, or suspension polymerization.

The polymer dispersions may have a solid contents of about 30% to about 65%. In some embodiments, the polymer dispersions may have a solid contents of about 35% to about 55%. In some embodiments, the polymer dispersions may have a solid contents of about 40% to about 45%. The polymer dispersions may have a particle size of about 20 nm to about 1200 nm. In some embodiments, the polymer dispersions may have a particle size of about 30 nm to about 500 nm. In some embodiments, the polymer dispersions may have a particle size of about 50 nm to about 300 nm.

The polymer dispersions may include a variety of other additives, such as, e.g. biocides. As used herein, a "biocide" is any substance that kills or inhibits the growth of microorganisms such as bacteria, molds, slimes, fungi, algae and the like. Illustrative biocides may include thiazolinones, triazines, sulfates, carbamates, oxazolidines, morpholines, phenolics, pyrithiones, and the like. For example, and without limitation, the biocide may be 1,2-benzoisothiazolin-3-one, 2-methyl-4-isothiazolin-3-one, tetrakis (hydroxymethyl) phosphonium sulfate (THPS), 1,3,5-tris (2-hydroxyethyl)-s-triazine, iodopropynylbutylcarbamate, 4,4-dimethyloxazolidine, 7-ethyl bicyclooxazolidine, a combination of 4-(2-nitrobutyl)-morpholine with 4,4'-(2-ethyl-2-nitrotrimethylene) dimorpholine, a combination of 5-chloro-2-methyl-4-isothiazolin-3-one with 2-methyl-4-isothiazolin-3-one, 2-bromo-2-nitro-1,3-propanediol, octylisothiazolinone, dichloro-octylisothiazolinone, dibromo-octylisothiazolinone, phenolics such as o-phenylphenol and p-chloro-*m*-cresol and their corresponding sodium and/or potassium salts, sodium pyrithione, zinc pyrithione, n-butyl benzisothiazolinone, 1-(3-chloroallyl)-3,5,7-triaza-1-azoniaadamantane chloride, chlorothalonil, carbendazim, diiodomethyltolylsulfone, trimethyl-1,3,5-triazine-1,3,5-triethanol, 2,2-dibromo-3-nitrilopropionamide, glutaraldehyde, N,N'-Methylene-bis-morpholine, ethylenedioxy methanol, phenoxyethanol, tetramethylol acetylenediurea, dithiocarbamates, 2,6-dimethyl-m-dioxan-4-ol acetate, dimethylol-dimethylhydantoin, tris(hydroxymethyl)nitromethane, bicyclic oxazolidines, or a mixture of any two or more such biocides. In some embodiments, the biocide may include 1,2-benzoisothiazolin-3-one and/or 2-methyl-4-isothiazolin-3-one.

The hyperbranched polymers may be cross-linked with a cross-linking agent to produce a cross-linked polymer. The cross-linked polymer may be a branched polymer. In some embodiments, the cross-linked polymer may include polymer gel particles. For example, the cross-linked polymer, in various embodiments, may include at least about 5 wt% gel, at least about 10 wt% gel, or at least about 15 wt% gel.

Illustrative cross-linking agents may include isocyanates, carbodiimides, aziridines, and melamines. In some embodiments, the cross-linking agent includes an isocyanate group. In some embodiments, the isocyanate is a blocked isocyanate. As used herein, a blocked isocyanate is an isocyanate reaction product that is stable at room temperature but dissociates to regenerate isocyanate functionality when heated. In other embodiments, the isocyanate is a di-functional or poly-functional isocyanate. Illustrative cross-linking agents include, but are not limited to, 1,6-hexamethylenediisocyanate, toluene diisocyanate, isophorone diisocyanate, polyisocyanates, isocyanate trimers, isocyanate pentamers, or a mixture of any two or more such diisocyanates. In some embodiments, the cross-linking agent includes polyisocyanates, isocyanate trimers, isocyanate pentamers, or a mixture of any two or more thereof.

In other embodiments, the cross-linking agent may be a carbodiimide, an aziridine, an oxazoline, or a glycidyl amine. In some embodiments, the carbodiimide may be a polycarbodiimide. Illustrative carbodiimides include, but are not limited to, *N*-(3-dimethylaminopropyl)-*N'*-ethylcarbodiimide (EDC); *N*,*N'*-dicyclohexylcarbodiimide (DCC); *N*,*N'*-diisopropylcarbodiimide (DIC); *N*-cyclohexyl-*N'*-(2-morpholinoethyl)carbodiimide methyl-*p*-toluenesulfonate (CMC); bis(trimethylsilyl)carbodiimide; 1,3-di-*p*-tolylcarbodiimide; polymer-based carbodiimides, or a combination of any two or more such carbodiimides. Polycarbodiimides such as Joncryl FLX-CL1 (available from BASF), CARBODILITE crosslinkers (available from Nisshinbo) or XL-7XX line commercially available from Picassian may also be used. Illustrative aziridines include, but are not limited to, tris (2-aziridinylpropionate) and pentaerythritol tris (3-(1-aziridinyl) propionate. Illustrative oxazolines include, but are not limited to, 2-vinyl-2-oxazoline, 2-vinyl-4-methyl-2-oxazoline, 2-vinyl-5-methyl-2 oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. Other illustrative aziridines include oxazoline group-containing polymers that are commercially available from Nippon Shokubai include EPOCROSS WS series (Watersoluble type) and K series (emulsion type) materials. Illustrative glycidyl amines include, but are not limited to, tetraglycidyl meta-xylenediamine available from CVC thermoset specialties under the trade name Erysis GA-240.

Methods of forming the polymer dispersions that include the hyperbranched polymer are also provided. Such methods include the steps of contacting an acid-functional resin dispersed in water with a functionalized amine wherein an amino group of the functionalized amine reacts with, or neutralizes, an acid group of the acid-functional resin to produce a neutralized, acid-functional resin. Subsequent contacting of the partially neutralized, acid-functional resin with an epoxy produces a hyperbranched polymer, wherein the polymer dispersion is an aqueous, cross-linkable, polymer dispersion. The hyperbranched polymer may include a carboxyl, hydroxyl, amino, uredo, acetoacetoxy, or diacetone group, or a combination of any two or more thereof. The functionalized amine may be any of the functionalized amines described herein. The hyperbranched polymer may be any partially cross-linked polymer as described herein.

The polymer dispersions provided herein may be prepared with minimal, or, in some embodiments without, use of ionic initiators and surfactants. In some embodiments, the polymer dispersions include less than about 1 wt%, less than about 0.5 wt%, or less than about 0.1 wt% of an ionic initiator and/or surfactant. In other embodiments, the dispersions lack the presence of any ionic initiators. In other embodiments, the dispersions lack the presence of any surfactants. With minimal, or no, surfactant or ionic initiator, the polymer dispersions may exhibit improved water sensitivity, corrosion resistance, and humidity resistance when cured in an ink, coating, or other application.

The acid-functional resin may be any of the acid-functional resins described above and may be prepared as described herein. The acid-functional resin may have an acid value sufficient to allow for increased branching of the resin. In some embodiments, the acid-functional resin may have a high acid value (*e.g.* 230 or higher), which makes it possible to achieve a good dispersion for the formation of the hyperbranched polymer. In some embodiments, the acid-functional resin may be further neutralized by a base. In some embodiments, the base may include hydroxide, ammonia, or mixtures thereof. In some embodiments, the base is ammonia. In some embodiments, the base does not include hydroxide.

In some embodiments, at least about 5 mol% of the acid groups on the acid-functional resin may be neutralized. In some embodiments, at least about 10 mol% of the acid groups on the acid-functional resin may be neutralized. In some embodiments, about 10 mol% to about 95 mol% of the acid groups on the acid-functional resin may be neutralized. In some embodiments, about 15 mol% to about 85 mol% of the acid groups on the acid-functional resin may be neutralized. In some embodiments, about 20 mol% to about 70 mol% of the acid groups on the acid-functional resin may be neutralized.

The epoxy may be any of the epoxies described herein including the epoxy monomers, polyepoxy-functional polymers, and monoepoxy-functional polymers. In some embodiments, the epoxy may include a polyepoxy-functional polymer, a monoepoxy-functional polymer, or combinations thereof. In some embodiments, the hyperbranched polymer is partially cross-linked and may contain a gel fraction. In some embodiments, the epoxy includes at least one polyepoxy-functional polymer. In some embodiments, the epoxy includes a combination of the polyepoxy-functional polymer and the monoepoxy-functional polymer. In some embodiments, the at least partially neutralized, acid-functional resin may be first contacted with the polyepoxy-functional polymer and the monoepoxy-functional polymer may be contacted second to form the partially cross-linked polymer. The reaction/contact with the polyepoxy-functional polymer increases the branching and molecular weight of the polymer to produce a polymer that is hyperbranched. In some cases, this results in the formation of a hyperbranched polymer that may contain a gel fraction. The second reaction with the monoepoxy-functional polymer further reacts with some of the acid functionalities on the polymer produced by the reaction of the at least partially neutralized, acid-functional resin and polyepoxy-functional polymer, reducing the acid value and making it possible to achieve a higher solids dispersion than would otherwise be possible. Also, the second reaction may further functionalize the polymer. The resulting hyperbranched polymer desirably have good water-resistance and toughness, lower MFFT, low VOC content, and high gloss potential. In other embodiments, the monoepoxy-functional polymer may be reacted before the polyepoxy-functional polymer with the at least partially neutralized, acid-functional resin or the monoepoxy-functional polymer and the polyepoxy-functional polymer may be reacted simultaneously with the at least partially neutralized, acid-functional resin.

In some embodiments, up to about 95 mol% of the acid groups on the at least partially neutralized, acid-functional resin may be bonded to the epoxy. In some embodiments, at least about 5 mol% of the acid groups on the at least partially neutralized, acid-functional resin may be bonded to the epoxy. In some embodiments, about 20 mol% to about 90 mol% of the acid groups on the at least partially neutralized, acid-functional resin may be bonded to the epoxy. In some embodiments, about 40 mol% to about 85 mol% of the acid groups on the at least partially neutralized, acid-functional resin may be bonded to the epoxy.

The epoxy may be reacted with the at least partially neutralized, acid-functional resin using known methods, including those described in U.S. Patent No. 6,034,157. The methods may include charging an aqueous dispersion of the acid-functional resin into a reaction chamber, adding a functionalized amine to partially neutralize the acid-functional resin, adding an epoxy to the chamber, and allowing the reactants to interact at a temperature and for a time sufficient for the reaction to come to the completion.

The hyperbranched polymer may have a higher molecular weight, a higher gel content, a lower acid value, and a higher hydroxyl value than the at least partially neutralized, acid-functional resin from which it is made. For example, such polymers may have a $M_n$ of about 2200 up to the gel point, and beyond, and an acid value of about 20-275. Depending upon whether the acid-functional resin has hydroxyl functionalities, the resulting polymer may have a hydroxyl value of about 10 to 260. In some embodiments, the polymer may have a gel fraction of about 10% to 85%.

As noted above with respect to 2-pack systems, the hyperbranched polymer dispersions may be further cross-linked with a cross-linking agent to produce a cross-linked polymer. In some embodiments, the cross-linked polymer may be 100% gelled in the cured state. The ratio of the crosslinker to the final dispersion depends on equivalent weight of the respective component. In the example section, relevant equations are provided that enables one skilled in the art to calculate the effective equivalent weight of the final dispersion based on the choice of hardener. The molar ratio the reactive groups on the crosslinker to those on the final dispersion is defined as index ratio. The index ratio can be between 0.01 to 10, between 0.1 to 5, between 0.5 to 3, between 0.85 to 2 or between 0.95 to 1.8.

The cross-linking agent may be any of the cross-linking agents described herein. In some embodiments, the cross-linking agent may include isocyanate, carbodiimide, aziridine, and/ or melamine groups. In some embodiments, the cross-linking agent may include an isocyanate group. In some embodiments, the cross-linking agent may include a carbodiimide group.

In another aspect, a coating composition is provided that includes any of the above hyperbranched polymers and a cross-linking agent. Also provided are 2-pack coating kits including a first pack containing the polymer dispersion that includes the hyperbranched polymers described herein; and a second pack containing a cross-linking agent as described herein. The polymer dispersions are well-suited for use in a variety of coating applications. Additionally, as discussed above, the properties of the polymers including acid value, hydroxyl value, and pot-life are tunable and the polymers may have a pot-life marker *(e.g.,* an increase in viscosity). A pot-life marker is useful for determining the time in which the coating maintains its useful attributes.

The coating compositions may have an MFFT of 0 °C to about 80 °C. In some embodiments, the coating

compositions may have an MFFT of about 5 °C to about 60 °C. In some embodiments, the coating compositions may have an MFFT of about 15 °C to about 45 °C.

Solvents for the coating compositions include, but are not limited to, acetate solvents such as propylene glycol methyl ether acetate, ethylene glycol monobutyl ether acetate, diethylene glycol monobutyl ether acetate, ethylene glycol diacetate, dipropylene glycol dimethyl ether, ethyl 3-ethoxypropionate, and combinations of two more thereof. In some embodiments, more hydrophilic solvents may provide a higher gloss clear coat. In some embodiments, protic solvents can also be used if the loss of properties such as hardness and chemical resistance is acceptable for particular applications.

The coating compositions may be clear coatings or colored paint coatings with pigment(s) *(e.g.,* titanium dioxide). Paints including the coating compositions may include other typical paint additives such as dispersants, pigments, extenders and fillers, rheology modifiers, solvents, and/or wetting agents.

The present invention, thus generally described, will be understood more readily by reference to the following examples, which are provided by way of illustration and are not intended to be limiting of the present invention.

## EXAMPLES

The monomers abbreviations used below are as follows:

"AA" is an abbreviation for acrylic acid;
"BA" is an abbreviation for butyl acrylate;
"Basonat® HW1000" or "HW1000" is a water-reducible, solvent-free, aliphatic polyisocyanate based on isocyanurated hexamethylene diisocyanate, available from BASF and having a viscosity at 25 °C of 4500 mPas.sec and a NCO content of 17%, with an equivalent weight of 247 g;
"BisFDGE" is a commercially available bisphenol F diglycidyl ether;
"BYK 348" is a commercially available silicone surfactant that may be used as a wetting agent, available from Altana; and
"BUMPA" is butyl mercaptopropionate
"C(12/14)GE " is an abbreviation for $C_{12}$-$C_{14}$ monoglycidyl ether;
"DEtA" is an abbreviation for diethanolamine;
"DIW" is an abbreviation for deionized water;
"DPGDGE" is dipropylene glycol diglycidyl ether;
"DMEA" is an abbreviation for dimethylethanolamine;
"EB Acetate" is an abbreviation for the solvent ethylene glycol monobutyl ether acetate;
"EGDGE" is ethylene glycol diglycidyl ether;
"EEP" is an abbreviation for the solvent ethyl 3- ethoxypropionate;
"2-EHGE" is 2-ethylhexanol glycidyl ether (2-EHGE);
"EtA" is an abbreviation for ethanol amine
"Foamstar® SI 2210" is a commercially available defoamer available from BASF.
"GPTMS" is an abbreviation for glycidoxy propyl trimethoxy silane;
"HEMA" is hydroxy ethyl methacrylate
"MAA" is an abbreviation for methacrylic acid;
"MDEtA" is an abbreviation for methyldiethanolamine;
"MEK" is an abbreviation for methylethylkeone;
"MMA" is an abbreviation for methyl methacrylate;
"NPDGE" is an abbreviation for neopentyl glycoldiglycidyl ether;
"PM Acetate" is an abbreviation for the solvent propylene glycol monomethyl ether acetate;
"RC 1" is a random copolymer of 10AA/ 14BA/ 49MMA/ 27Sty ($M_n$ = 5,126; $M_w$ = 15,853 (measured by GPC using polystyrene standards for calibration); and a $T_g$ 75 °C (measured by DSC - midpoint value; ramp 10 °C/min);
"STY" is an abbreviation for styrene;
"TEtA" is an abbreviation for triethanolamine;
"TMPTGE" is Trimethylolpropane triglycidyl ether; and
"Tri(IPA)" is triisopropanolamine.

Example 1: Preparation and characterization of acid functional polymers.

To prepare 2000 g of a dispersion having about 44 wt% solids, 0.011 pphm (part per hundred monomers) of surfactant was added to a 2 L round bottom flask equipped with a condenser, an overhead stirrer, and two addition ports. Water (950 g) was then added and the solution heated to 80 °C under a nitrogen blanket. A monomer feed was prepared

according to the composition(s) shown in Table 1. Upon reaching thermal equilibrium, 5 wt% of the feed was quickly charged and allowed to mix in for 5 minutes. An aqueous of initiator (0.004 pphm) was prepared and injected to the reaction mixture and allowed to react for an additional 10 minutes followed by feeding the rest of the monomers over 100 minutes. After completion of the feed, the dispersion was maintained at 80 °C for an additional 50 minutes, followed by cooling down and filtration. In RC3 the molecular weight was regulated by incorporating 1 wt% BUMPA as chain transfer agent in the feed composition. Note that for the entries presented in Table 1, RC1 was prepared *via* a high temperature, continuous polymerization process as described in U.S. Patent Nos. 5,461,60; 4,414,370; and 4,529,787, while RC2 and RC3 were synthesized *via* the emulsion polymerization process as described above.

Table 1. Formulations and characteristics of acid functional polymers.

| Polym. | Feed composition (wt%) | Tg (°C) | $M_n$ (kDa) | $M_w$ (kDa) | PDI |
|---|---|---|---|---|---|
| RC1 | 0.49 MMA/ 0.27 Sty/ 0.14 BA/ 0.1 AA | 75 | 5.1 | 15.8 | 3.1 |
| RC2 | 0.4MMA/0.25Sty/0.20EHA/0.1MAA/0.05HEMA | 75 | 48.2 | 255.5 | 5.3 |
| RC3 | 0.4MMA/0.25Sty/0.19EHA/0.1MAA/0.05HEMA /0.01Bumpa | 71 | 12.3 | 34.1 | 2.8 |

Table 1 continued

| Polym. | Solids (wt%) | pH | Visc. (mPa.sec) | MFFT (°C) | *d* (nm) | Theo. Acid # (mg KOH/ g) | Theo. OH# (mg KOH/ g) |
|---|---|---|---|---|---|---|---|
| RC1 | 99.9 | NA | N/A | N/A | N/A | 78 | 0 |
| RC2 | 44.0 | 2.19 | 74 | 68 | 78 | 65 | 22 |
| RC3 | 44.0 | 2.13 | 61 | 67 | 86 | 65 | 22 |

Example 2: Partial Neutralization of an Acid-functional Resin.

Dispersions of RC1 were prepared by reacting the polymer with a variety of functionalized amine reactants, *i.e.,* neutralizers, *(see* Table 2). These dispersions were then reacted with epoxy-functional reactants *(see* Table 3). Deionized water, and neutralizer(s), were added together followed by a deionized water flush. The reactants were then heated to 88 °C and allowed to react for 2-4 hours. The epoxy-functional reactants were then added. Note that when more than one neutralizer was used with RC1, both neutralizers were added at the start to make the resin dispersion. Additional base could be added after the epoxy reaction to adjust pH, hydroxyl value, etc., however, the addition of more base before the epoxy reaction may result in excessively high viscosities. In the case of RC2 and RC3, the order of neutralization and reaction with epoxy is optional. Typically a small fraction of acid groups were neutralized to provide additional colloidal stability. Upon reaction with epoxies, more base can be added to adjust pH, hydroxyl value, etc.

Example 3: Partial Neutralization of an Acid-functional Resin

An acid-functional resin, referred to here as "RC 1" was reacted with a variety of functionalized amine reactants, *i.e.,* neutralizers, (see Table 1) and epoxy-functional reactants (see Table 2). , deionized water, and neutralizer(s), were added together followed by a deionized water flush. The reactants were then heated to 88 °C and allowed to react for 2-4 hours. Next, the epoxy-functional reactants were added as shown in Example 2. For Sample G, neutralizer 1 and neutralizer 2 were added at the same time.

Table 2: Acid-functional Resin and Neutralizer(s)

| Sample ID | Acid-functional resin used | Acid-functional resin (g) | Neutralizer 1 (g) | Neutralizer 2 (g) |
|---|---|---|---|---|
| A | RC1 | 270.27 | 14.12 MDEtA | N/A |
| B | RC1 | 283.78 | 7.60 EtA | N/A |
| C | RC1 | 269.87 | 11.18 DMEA | 3.59 DMEA |

(continued)

| Sample ID | Acid-functional resin used | Acid-functional resin (g) | Neutralizer 1 (g) | Neutralizer 2 (g) |
|---|---|---|---|---|
| D | RC1 | 293.92 | 13.55 DEtA | N/A |
| E | RC2 | 444.55 | 6.75 TEtA | 2.73 ammonia |
| F | RC1 | 257.18 | 10.66 DMEA | 1.66 DMEA |
| G | RC1 | 508.44 | 12.88 MDEtA | 7.35 EtA |
| H | RC1 | 581.07 | 19.32 MDEtA | 5.70 EtA |
| I | RC1 | 581.07 | 9.20 MDEtA | 10.89 EtA |
| J | RC1 | 653.71 | 11.38 MDEtA | 20.174 DEtA |
| K | RC1 | 653.71 | 17.07 MDEtA | 15.15 DEtA |
| L | RC1 | 653.71 | 22.77 MDEtA | 10.13 DEtA |
| M | RC2 | 441.29 | 6.7 TEtA | 2.71 ammonia |
| N | RC1 | 609.52 | 15.92 MDEtA | 14.22 DEtA |
| O | RC1 | 647.52 | 16.91 MDEtA | 15.00 DEtA |
| P | RC1 | 291.13 | 13.42 DEtA | 0.01 DEtA |
| Q | RC1 | 609.52 | 28.09 DEtA | 0.11 DEtA |
| R | RC1 | 321.61 | 22.73 BDEtA | N/A |
| S | RC1 | 321.61 | 16.8 MDEtA | N/A |
| T | RC1 | 283.78 | 7.60 EtA | N/A |
| U | RC1 | 293.92 | 13.55 DEtA | N/A |
| V | RC2 | 459.84 | 6.99 TEtA | 3.23 ammonia |
| w | RC1 | 35.86 | 0.91 ammonia | N/A |
| X | RC3 | 444.55 | 8.67 | 3.26 ammonia |
| Y | RC1 | 653.71 | 11.38 MDEtA | 20.17 DEtA |
| Z | RC1 | 653.71 | 17.07 MDEtA | 15.15 DEtA |
| A1 | RC1 | 653.71 | 22.77 MDEtA | 10.13 DEtA |
| A2 | RC1 | 377.59 | 13.54 TEA | 4.15 ammonia |
| A3 | RC3 | 441.29 | 6.7 TEtA | 2.71 ammonia |
| A4 | RC3 | 459.84 | 3.49 TEtA | 3.23 ammonia |

Example 4: Reaction of the Partially Neutralized, Acid-functional Resin with Epoxy-functional Resin(s)

The partially neutralized, acid-functional resins of Example 1 were reacted with the epoxy-functional reactants *(see* Table 2). Epoxy-functional polymer 1 was added, followed by a deionized water flush, and allowed to react for 2 hours at 88 °C. Epoxy-functional polymers 2 and 3 were then added, flushed with deionized water, and allowed to react for 3 hours at 88 °C. A small amount of biocide was added to the hyperbranched polymer followed by a final water flush to achieve a polymer dispersion with about 35-45% solids.

Table 3: Epoxy-functional Resins

| Sample ID | Epoxy-functional polymer 1 (g) | Epoxy-functional polymer 2 (g) | Epoxy-functional polymer 3 (g) |
|---|---|---|---|
| A | 11.80 NPDGE | 35.26 C(12/14)GE | 4.02 GPTMS |
| B | 12.39 NPDGE | 37.02 C(12/14)GE | 4.22 GPTMS |
| C | 11.79 NPDGE | 20.17 C(12/14)GE | 4.02 GPTMS |

(continued)

| Sample ID | Epoxy-functional polymer 1 (g) | Epoxy-functional polymer 2 (g) | Epoxy-functional polymer 3 (g) |
|---|---|---|---|
| D | 18.40 NPDGE | 38.34 C(12/14)GE | 4.38 GPTMS |
| E | 1.59 EGDGE | 15.39 EHGE | 2.42 DPGDGE |
| F | 11.23 NPDGE | 33.55 C(12/14)GE | 3.83 GPTMS |
| G | 22.21 NPDGE | 66.33 C(12/14)GE | 7.57 GPTMS |
| H | 25.38 NPDGE | 75.80 C(12/14)GE | 8.65 GPTMS |
| I | 25.38 NPDGE | 75.80 C(12/14)GE | 8.65 GPTMS |
| J | 28.55 NPDGE | 85.28 C(12/14)GE | 9.73 GPTMS |
| K | 28.55 NPDGE | 85.28 C(12/14)GE | 9.73 GPTMS |
| L | 28.55 NPDGE | 85.28 C(12/14)GE | 9.73 GPTMS |
| M | 20.83 EHGE | -- | -- |
| N | 80.45 BisFDGE | 0.0 C(12/14)GE | 9.07 GPTMS |
| O | 35.61 BisFDGE | 84.47 C(12/14)GE | 9.64 GPTMS |
| P | 16.01 BisFDGE | 37.98 C(12/14)GE | 4.33 GPTMS |
| Q | 80.45 BisFDGE | 0.0 C(12/14)GE | 9.07 GPTMS |
| T | 12.84 NPDGE | 38.34 C(12/14)GE | 4.38 GPTMS |
| U | 11.23 NPDGE | 33.55 C(12/14)GE | 3.83 GPTMS |
| V | 12.67 TMPTGE | N/A | N/A |
| W | 2.22 NPDGE | 5.07 C(12/14)GE | 0.54 GPTMS |
| X | 1.59 EGDGE | 15.39 EHGE | 2.42 DPGDGE |
| Y | 1.59 NPDGE | 4.74 C(12/14)GE | 0.54 GPTMS |
| Z | 1.59 NPDGE | 4.74 C(12/14)GE | 0.54 GPTMS |
| A1 | 1.59 NPDGE | 4.74 C(12/14)GE | 0.54 GPTMS |
| A2 | 29.22 BisFDGE | 28.19 C(12/14)GE | N/A |
| A3 | 20.83 2-EHGE | NA | NA |
| A4 | 12.67 TMPTGE | NA | NA |

Example 5: Clear Coat Formulations for Samples T, U, V, and W

The hyperbranched polymer T, U, V, and W were characterized and their equivalent weight ($EQW_{polyol}$) calculated depending on the functionalities present in the hyperbranched polymer *(see* Table 3).

To determine the equivalent weight of the hyperbranched polymer ($EQW_{polyol}$) the following equations were used:

Equation 1:

$$EQW_{polyol} = (561{,}000)/(\text{OH Number X fractional solids})$$

In Equation 1, OH number is the sum of contributions of OH groups from the acid-functional resin, neutralizer, and secondary OH groups formed upon reaction of the epoxy-functional polymer with the acid groups of the acid-functional resin.

When primary and secondary amines were present in the hyperbranched polymer, Equation 2 was used to

determine the equivalent weight of the hyperbranched polymer. The NH groups were taken into account in calculating equivalent weight of the hyperbranched polymer since the active hydrogens on the amine moiety can react with the cross-linking agent isocyanate to produce urea linkages. The boiling point of these compounds is high and unlike ammonia, they tend to stay in the film and participate in the cross-linking reaction with Part B. Since functional amines are typically non-fugitive, they stay in the film and can act as a plasticizer and decrease minimum film formation temperature. The amines may be chosen in such a way that they react with the cross-linker in a 2-pack system and act as reactive plasticizers.

Equation 2:

$$EQW_{polyol} = (561{,}000)/[(\text{OH Number} + \text{NH number}) \text{ X } (\text{fractional solids})$$

The acid value of the dispersion may also be included in the EQW calculation:

Equation 3:

$$EQW_{polyol} = (561{,}000)/[(\text{OH Number} + \text{NH number} + \text{acid Number}) \text{ X } (\text{fractional solids})$$

In reactions with other cross-linkers, the same concept was used to calculate an effective equivalent weight that represents all the functionalities that can react with the specific crosslinked under application conditions.

When formulating a 2-pack coating, the molar ratio between the reactive groups is defined as the index ratio. The equivalent weight of the hardeners are either provided by the manufacturer or can be obtained *via* analytical methods such as titration. For the binder, the effective equivalent weight as described above was used.

Table 4: Characterization data of dispersions T, U, V, and W

| Example | Amine | Acid # | OH # (mg KOH/g) | Sum (OH and NH #) | Solids (wt%) |
|---|---|---|---|---|---|
| W | Ammonia | 15 | 47 | 47 | 43.5 |
| T | EtA | 23 | 63 | 110 | 40.6 |
| U | DEtA | 23 | 81 | 102 | 44.1 |
| A | MDEtA | 23 | 81 | 81 | 40.4 |

Table 3 Continued

| Example | pH | MFFT | D(nm) | Visc (cps) | EQW (OH) | EQW(OH+NH) |
|---|---|---|---|---|---|---|
| W | 8.15 | 28 | 95 | 460 | 2744 | 2744 |
| T | 8.08 | 16 | 195 | 5550 | 2195 | 1261 |
| U | 7.97 | 23 | 155 | 776 | 1569 | 1245 |
| A | 8.19 | 20 | 112 | 556 | 1716 | 1716 |

To prepare part A, to the individual dispersions T, U, A, and W were added a solvent (EB), a wetting agent (BYK 348), and a defoamer (Foamstar SI2210) *(see* Table 5). To the mixtures, part B was added which consists of a 75 wt% solution of the cross-linking agent HW1000 in EEP was added at an index ratio of 1:0.65 to 1:1.5 (number of isocyanate groups to hydroxyl groups available in part A) to provide the clear coats of samples T, U, A, and W (effective equivalent weight: 329.3 g). Part B was combined with Part A using a Cowles blade at approximately 1000 rpm for 5 minutes. PH was adjusted to 8.0 - 8.5 using DMEtA. The mixture was then allowed to sit at room temperature. Periodically, pH and viscosity were measured and drawdowns were prepared to assess film formation and other coating attributes.

Table 5: Clear Coat Formulations for Samples T, U, V, and W

| | Sample | | | |
|---|---|---|---|---|
| | W' | T' | U' | A' |
| Dispersion | W | T | U | A |
| Wt (g) | 119.40 | 120.51 | 107.74 | 115.83 |
| EB | 7.03 | 7.10 | 6.35 | 6.82 |
| | | | | |
| HW1000* | 15.94 | 15.04 | 25.36 | 18.82 |
| EEP | 5.31 | 5.01 | 8.46 | 6.28 |
| | | | | |
| BYK 348 | 1.76 | 1.77 | 1.58 | 1.70 |
| Foamstar SI 2210 | 0.56 | 0.57 | 0.51 | 0.54 |
| | | | | |
| Total | 147.68 | 147.66 | 147.91 | 147.75 |
| Solids (wt%) | 45 | 43 | 49 | 44 |
| | | | | |
| Index | 1.50 | 0.65 | 1.20 | 1.20 |
| *All dispersions were formulated with HW1000 (100% solids, viscosity at 25 °C: 4500 mPas, NCO content: 17%, EQW: 247 g). | | | | |

As demonstrated in FIGs. 1-4, using a functionalized amine (FIGs. 2-4) compared to ammonia (FIG. 1) as a neutralizer affects viscosity evolution of the dispersion after addition of the hardener. For each of the clear coats, the pH dropped to 6-7 and the viscosity remained unchanged except for clear coat A, which showed a strong viscosity increase approximately an hour after activation at pH of about 7.6 (see FIG. 4). Although the dispersion A initial viscosity is relatively low (556 mPas.sec), upon activation with the hardener, viscosity increased significantly and reached over 2000 mPas.sec right after the activation. One hour after activation the system turned into a paste and was over 100 Pas.sec in viscosity.

Example 6: Clear Coat Formulations for Samples A1, Z, and Y

Following the same procedure as in Example 3, the clear coat formulations for samples A1, Z, and Y were made as shown in Table 5. The index ratio was based on total OH+NH (equation 2).

Table 6: Characterization data of dispersions A1, Y, and Z

| Example | Amine | Acid # | OH# | Sum (OH and NH #) | Solids (wt%) |
|---|---|---|---|---|---|
| A1 | MDEtA and DEtA | 23 | 82 | 89 | 41.36 |
| Y | MDEtA and DEtA | 23 | 82 | 92 | 42.44 |
| Z | MDEtA and DEtA | 23 | 82 | 95 | 43.3 |

Table 5 Continued

| Example | pH | MFFT | D(nm) | Visc (cps) | EQW (OH) | EQW(OH+NH) |
|---|---|---|---|---|---|---|
| A1 | 8.15 | 13.0 | 155 | 1590 | 1654 | 1532 |
| Y | 8.21 | 9.0 | 150 | 1870 | 1612 | 1437 |
| Z | 8.20 | 10.0 | 127 | 870 | 1580 | 1357 |

Table 7: Clear Coat Formulations for Samples A1, Y, and Z

| | Sample | | |
|---|---|---|---|
| | A1' | Y' | Z' |
| Dispersion | A1 | Y | Z |
| Wt (g) | 130.17 | 131.18 | 130.0 |
| EB | 7.67 | 7.73 | 7.66 |
| | | | |
| HW1000 | 14.73 | 13.91 | 14.87 |
| EEP | 4.91 | 4.6 | |
| BYK 348 | 1.91 | 1.93 | 1.91 |
| Foamstar SI 2210 | 0.61 | 0.62 | 0.61 |
| | | | |
| Total | 160.0 | 160.0 | 160.0 |
| Solids (wt%) | 43 | 43.5 | 44.5 |
| Index | 0.70 | 0.62 | 0.63 |

As demonstrated in FIGs. 5A-5C, using the same functionalized amines in different ratios affects the polymer dispersion and pot-life. Dispersion A1 was made by neutralizing the majority of acid groups with MDEtA. In this case, for A1', a drop in pH from about 8 to about 7 over about 2 hours correlated with a viscosity increase by more than an order of magnitude followed by gelling (FIG. 5C). Dispersions Z and Y were made with lower content of MDEtA. Sample Z did not show a conclusive viscosity increase during the monitoring but gelled overnight (FIG. 5B). Sample Y which had the lowest content of MDEtA did not gel at all and formed a precipitate after a few days (FIG. 5A).

Example 7: Clear Coat Formulations for Samples AA-JJ:

Following the same procedure in Examples 1 and 2, polymer dispersion were prepared with a variety of neutralizers, (see Table 8) and epoxy-functional reactants (see Table 9). The characteristics of the samples are provided in Table 10.

Table 8: Dispersion of RC1 prepared with different functional amines

| Sample ID | Acid-functional resin (wt%) | Neutralizer 1 (wt%) | Neutralizer 2 (wt%) |
|---|---|---|---|
| AA | 36.74 | 0.92 ammonia | N/A |
| BB | 37.65 | 1.01 MDEtA | 0.46 $NH_3$ |
| CC | 39.13 | 1.49 MDEtA | 0.22 $NH_3$ |
| DD | 39.53 | 1.5 MDEtA | 0.22 $NH_3$ |
| EE | 35.98 | 1.21 TEtA | 0.4 $NH_3$ |
| FF | 35.98 | 0.85 DEtA | 0.38 $NH_3$ |
| GG | 36.74 | 1.54 DEtA | N/A |
| HH | 35.57 | 1.61 MDEtA | N/A |
| II | 36.44 | 1.44 MDEtA | 0.17 $NH_3$ |
| JJ | 35.98 | 1.42 MDEtA | 0.17 $NH_3$ |

Table 9: Formulas for final dispersions based upon the dispersions of Table 8 with epoxy resins.

| Sample ID | Epoxy-functional polymer 1 (wt%) | Epoxy-functional polymer 2 (wt%) | Epoxy - functional polymer 3 (wt%) | EQW (OH+NH) |
|---|---|---|---|---|
| AA | 1.6 NPDGE | 4.79 C(12/14)GE | 0.55 GPTMS | 40 |
| BB | 2.07 BisFDGE | 4.89 C(12/14)GE | 0.57 GPTMS | 60 |
| CC | 2.14 BisFDGE | 1.82 C(12/14)GE | 0.6 GPTMS | 60 |
| DD | 1.73 NPDGE | 1.84 C(12/14)GE | 0.6 GPTMS | 60 |
| EE | 1.98 BisFDGE | 4.68 C(12/14)GE | 0.55 GPTMS | 70 |
| FF | 1.98 BisFDGE | 4.68 C(12/14)GE | 0.55 GPTMS | 70 |
| GG | 1.6 NPDGE | 4.79 C(12/14)GE | 0.55 GPTMS | 96 |
| HH | 1.55 NPDGE | 4.63 C(12/14)GE | 0.53 GPTMS | 76 |
| II | 2.0 BisFDGE | 4.74 C(12/14)GE | - | 70 |
| JJ | 1.98 BisFDGE | 4.68 C(12/14)GE | 0.55 GPTMS | 70 |

Table 10: characteristics of dispersions used in example 6

| Example | Amine(s) | Acid # | OH # | Sum (OH and NH #) | Solids (wt%) |
|---|---|---|---|---|---|
| AA | ammonia | 23 | 40 | 40 | 42.33 |
| BB | MDEtA:ammonia | 23 | 60 | 60 | 44.67 |
| CC | MDEtA:ammonia | 39 | 60 | 60 | 44.17 |
| DD | MDEtA:ammonia | 40 | 60 | 60 | 39.11 |
| EE | TEtA:ammonia | 23 | 70 | 70 | 42.56 |
| FF | DEtA:ammonia | 23 | 60 | 70 | 42.53 |
| GG | DEtA | 23 | 78 | 97 | 43.34 |
| HH | MDEtA | 23 | 76 | 76 | 41.83 |
| II | MDEtA:ammonia | 26 | 69 | 69 | 43.93 |
| JJ | MDEtA:ammonia | 23 | 71 | 71 | 42.81 |

Table 10 Continued

| Example | pH | MFFT | D (nm) | Visc (cps) | EQW (OH) | EQW(OH+NH) |
|---|---|---|---|---|---|---|
| AA | 8.47 | 24.5 | 82 | 382 | 3326 | 3326 |
| BB | 8.10 | 30.0 | 89 | 1303.0 | 2070 | 2070 |
| CC | 7.84 | >33 | 104 | 27000 | 2119 | 2119 |
| DD | 7.93 | >33 | 143 | 3560 | 2369 | 2369 |
| EE | 7.89 | NA | 76 | 147.0 | 1849 | 1849 |
| FF | 8.03 | NA | 67 | 136.0 | 2163 | 1851 |
| GG | 7.84 | 19.6 | 96 | 9220 | 1660 | 1341 |
| HH | 8.01 | 20.5 | 138 | 5270 | 1765 | 1765 |
| II | 8.11 | 22.6 | 67 | 369.5 | 1864 | 1864 |
| JJ | 8.04 | 22.3 | 88 | 219.5 | 1855 | 1855 |

Using the polymer dispersion of samples AA-JJ clear coats were prepared following the formulation in Table 11. To a polymer dispersion, 75% active isocyanate cross-linker solution was added (26 g Basonat® HW1000 and 8.6 g acetate solvents, which are further defined within each experiment). The combined solids of the polymer dispersion and cross-linker solution were then adjusted to 45% solids unless otherwise noted. The cross-linking agent solution was combined with the mixture using a Cowles blade at approximately 1000 rpm for 5 minutes. The mixture was then allowed to sit at 25 °C. Periodically, pH and viscosity were measured and drawdowns were prepared to assess film formation and other coating attributes. All formulations were indexed at 1.5 isocyanate/OH unless otherwise noted.

Table 11: Clear Coat Formulation for Sample CC

| Component | amount (g) |
|---|---|
| Polymer Dispersion (CC) | 145.2 |
| Isocyanate solution (index ~ 1.5) | 31.44 |
| water | 12 |
| total | 180.64 |
| solids | 45% |

FIG. 6 shows a triplicate of viscosity increase as a function of time after the addition of the isocyanate solution to sample BB with PM acetate as a solvent. The combined part A and B had a solids of 45% in this case. As pH dropped to 6.7-6.8, viscosity of the system began to increase. At about 150 minutes, the viscosity was about 500 mPa.sec.

FIG. 7 shows the solvent can affect film properties such as gloss. Clear coats of sample BB were prepared according to the formula shown in table 11 with the solvents: PM acetate, a 50/50 mix of PM acetate/EB acetate, and EB acetate. Generally, more hydrophilic solvents provided higher gloss clear coats with binders of this invention.

FIG. 8A shows the effect of solids content on pot-life. Clear coats of sample BB were prepared with PM acetate with a 40 wt% and 45 wt% solids. The pot-life time increased as the weight percent solids decreased. Reducing the solids content by 5% delayed the onset of viscosity increase by about 30 minutes. FIG. 8B depicts evaluation of coatings prepared as above in terms of gloss and MEK rub resistance during the open-time of the coating composition. As will be observed coatings prepared from the coating composition during the open-time retain gloss and MEK rub resistance, however, when the open-time is exceeded and the pot-life marker reached, the coating performance diminishes rapidly. The "open-time" is the time after activation with a polyisocyanate during which the coating retains its useful attributes.

FIGs. 9A and 9B show how using ammonia compared to an alkanolamine neutralizer effects the pH and open time. Clear coats of sample AA (ammonia neutralizer) and sample BB (alkanol amine/ammonia neutralizer) were prepared with PM acetate at 40 wt% solids. The isocyanate solutions used for both clear coat compositions had equal concentrations with an index of 2.25 for sample AA and 1.5 for sample BB. In other words, the experiment was done at equal polyisocyanate concentration in the system. In is known to the person skilled in the art that concentration affect reaction rates. By doing the experiment this way, we attempted to create similar poly isocyanate reaction rate in both experiments although admittedly matching the reaction rates exactly is almost impossible in these systems. FIG. 9A shows after about 400 minutes the clear coat with sample AA did not have a noticeable increase in viscosity. As such, there is no clear indicator for determining the extent of cross-linking. Visual inspection of clear coats prepared from system AA periodically showed that the system has an open time of approximately 80 minutes ("min"), i.e. approximately 80 min after addition of polyisocyanate solution, the system does not form a coherent film and loses performance as a protective coating. In contrast, FIG. 9B shows that the clear coat with sample BB kept its useful properties during open time and had an increase in viscosity at about 180 minutes. As such, the current technology could be used to enable coatings with a clear end of useable time indicator.

The pH at which primary particles begin to join together and form space filling agglomerates due to a flocculation process depends on the colloidal stability of the particles. FIGs. 10A and 10B show how pot-life can be tuned by adjusting colloidal stability and pH. FIG. 10A shows the effect of a neutralization package on open time (all clear coats were adjusted to 40 wt% solids). Although samples BB (1.01 g MDEtA and 0.46 g $NH_3$), CC (1.49 g MDEtA and 0.22 g $NH_3$), and HH (1.61 g MDEtA) each included the neutralizer MDEtA and samples BB and CC both include MDEtA and $NH_3$, the open times for the compositions varied considerably. FIG. 10B shows that adjusting the initial pH of a clear coat composition (sample HH) from 8.18 to 8.48 did not change the pH at which flocculation began (pH ~7.06), but did change the time it took for flocculation to begin. The pH increase of 0.4 increased the time to flocculation by about 70 minutes.

Preferably the polymer dispersions and coatings that include the polymer dispersions herein are free of ionic and non-ionic surfactants. FIGs. 11A and 11B show the effect of ionic and non-ionic surfactants on pot-life. FIG. 11A shows the pot-life time for the clear coat made with sample II formulated at 45% solids according to the formula shown

in Table 11 was about 110 minutes. FIGs. 11B and 11C show how the addition of only 1 wt% (based on the polymer dispersion solids) of a strong nonionic surfactant (FIG. 11B) or ionic surfactant (FIG. 11C) can greatly affect the open-time. In these examples, Disponil AFX 4070 was used as non-ionic surfactant and Lutensit® A-EP was used as ionic surfactant. Both materials are available from BASF care chemicals.

Example 8: Post-addition of functional amines (samples KK, LL)

Dispersion KK was prepared by adding TEtA to dispersion AA to adjust the OH# to 70 mg KOH/ g polymer.

Dispersion LL was prepared as follows: RC1 (453.11 g), water (508.65 g) and an ammonia solution (11.38 g of 28.5 to 29.5 wt% in water solution) was added to the reaction vessel. The mixture was heated to 88-92 °C and kept under agitation until all the resin was dispersed in water. To the dispersion was then added BisFDGE (35.1 g) and the mixture held for 2 hours. C(12/14)GE (33.8 g) was then added and the temperature maintained for an additional 3.5 hours. The dispersion was then cooled to room temperature, followed by addition of triethanolamine to increase the OH# to 70 mg KOH/ g. This results in a slight increase in pH and viscosity in both cases. KK and LL were then stored at 50 °C overnight, over which time the viscosity increased from 230 mPa.sec to 260 mPa.sec for LL, and the viscosity decreased for KK from 1970 mPa.sec to 770 mPa.sec.

Dispersion KK and AA were then converted to a 2-pack clear coat paint using the formula shown in Table 12. Part A and Part B were combined as described above with a high shear blade. Upon activation with the hardener, the evolution in pH and in viscosity were tracked. FIG. 12 illustrates the viscosity and pH evolution with time. One can observe that dispersion KK shows a clear viscosity increase when activated with the Basonat HW1000 solution.

Table 12. Clear coat formulation for samples KK and LL.

| | Sample | | | |
|---|---|---|---|---|
| | AA' | A2' | KK' | LL' |
| Part A | | | | |
| Dispersion type | AA | A2 | KK | LL |
| Wt (g) | 244.40 | 221.10 | 237.10 | 222.00 |
| | | | | |
| Part B | | | | |
| HW1000 (g) | 41.80 | 44.85 | 47.34 | 44.40 |
| HI 2000 (g) | | | | |
| PMAc (g) | 13.80 | 25.51 | 15.66 | 25.22 |
| DEAc (g) | | 8.50 | | 8.41 |
| DIW (g) | 68.00 | 55.00 | 73.50 | 50.70 |
| | | | | |
| Total (g) | 368.00 | 354.96 | 373.60 | 350.73 |
| Solids (wt%) | 40 | 40 | 40 | 40 |
| | | | | |
| Index | 2.25 | 1.5 | 1.5 | 1.5 |

During the first two hours, drawdowns were periodically prepared on cold rolled steel (CRS) to evaluate performance. These films were aged in a CTH room (25 °C and 50% RH) for 7 days before evaluation. The films were on average 1-1.5 mil in thickness. FIG. 13 shows variation of gloss (A), hardness (B) and chemical resistance (MEK double rubs) for panels that were prepared at different times after activation. One can observe that addition of functional amine helps with building a tighter crosslinked network and results in harder coatings with better chemical resistance.

Following a similar protocol, dispersions LL and A2 were turned into a 2-pack clear coat paint according to the Table 12 formulas. The initial pH was adjusted to 8.3-8.4 using DMEtA. The evolution in pH and in viscosity were tracked after activation with Part B as shown in FIG. 14. One can observe that post-addition of TEtA resulted in a system with a slightly shorter pot-life.

During the first 2 hours, drawdowns were periodically prepared on (CRS) and aged in a CTH room (25 °C and

50% RH) for 7 days before evaluation. The films were on average 1-1.5 mil in thickness. FIG. 15 shows variation of gloss (A), hardness (B) and chemical resistance (MEK double rubs) for panels that were prepared at different times after activation. One can observe that post addition of TEtA resulted is systems with better gloss and hardness and comparable chemical resistance.

Example 9: Effect of pH adjustment after activation with Polyisocyanate.

Clear coat formulas of dispersion A2 were prepared according to the formula shown in Table 12. As show in FIG. 14, it takes about 150 min for A2' to reach a viscosity of ~ 1000 mPas.sec. FIG. 16 shows the result of two experiments in which different amount of DMEtA were added to System A2' formula as depicted in Table 12 after about 120 min from activation with Part B (*see* Table 13). The first experiment (FIG. 16, A) was done by adding 0.38 g DMEtA to A2' 121 min after activation with Part B which resulted in an increase in pH from 7.3 to 8.0. The 0.7 unit increase in pH resulted in about 120 min increase in the time needed to reach to ~ 1000 mPas.sec compared to A2'.

In a separate experiment (FIG. 16, "B"), 123 min into activation with Part B, pH was increased by about 1 unit with addition of 1.52 g DMEtA which resulted in an increase in pH from 7.3 to 8.3. The 1 unit increase in pH resulted in more than 120 min increase in the time needed to reach to ~ 1000 mPas.sec.

Example 10: White Paint Formulations

Using the polymer dispersions of samples AA-JJ white paints were prepared. The white paints were prepared following the formulation in Table 13, in which "polyol dispersion" refers to the polymer dispersion of samples AA-JJ and Part B refers to the isocyanate cross-linker solution.

Table 13: White Paint Formulation

| PART A - Grind | Amount (g) |
|---|---|
| Grind-Combine under agitation | |
| DI Water | 23.17 |
| Foamstar SI 2210 | 0.34 |
| Dispex Ultra PX 4575 | 6.87 |
| Ti-Pure R-706 | 111.53 |
| High Shear Disperse for 10 minutes at 2500 RPM. Then Add: | |
| DI Water | 23.17 |
| Grind Check: hegman > 7 | |
| Total Part A Grind | 165.08 |
| | |
| PART A - Letdown | |
| LET DOWN with agitation at 1500 RPM | |
| *Polyol Dispersion* | 428.98 |
| Foamstar ST 2446 | 1.72 |
| Hydropalat WE 3650 | 6.01 |
| Rheovis PU 1191 | 2.14 |
| High Shear Disperse for 10 minutes. | |
| DI Water | 85.792 |
| Total Part A Letdown | 524.63 |
| Total Part A Grind + Letdown | 689.71 |
| | |
| PART B - Premix until dissolved | |

(continued)

| PART A - Grind | Amount (g) |
|---|---|
| Basonat HW 1000 | 68.63 |
| PM Acetate | 51.48 |
| Total PART B | 120.11 |
| | |
| Total Part A + Part B | 809.82 |
| Mix with lift blade for 5 minutes at 1000 RPM | |

A white paint formulation was prepared following the formulation of Table 13 except Part A was 120 g and Part B was 22 g (total of 142 g). After mixing Part A and Part B, the pH and viscosity of the mixtures was measured. The paint composition was then applied to various ferrous and non-ferrous metal substrates at 0, 60, 90, and 120 minutes after mixing. After the coated substrates were cured, various properties including gloss, hardness, adhesion, MEK resistance, and salt spray resistance were measured (see Table 14).

Table 14: White Paint Coating Properties

| Time (min) | 0 | 60 | 90 | 120 |
|---|---|---|---|---|
| | | | | |
| Viscosity (CP) | 211 | 108 | 156 | 523 |
| pH | 8.4 | 7.91 | 7.69 | 7.5 |
| | | | | |
| 60° Gloss | 84.9 | 83.2 | 82.3 | 82.4 |
| Filmbuild (mils) | 2.1 | 2.1 | 2.0 | 2.1 |
| | | | | |
| Koenig Hardness | | | | |
| Average Hardness Measurement | 71 | 67.5 | 67 | 67 |
| Filmbuild (mils) | 2.1 | 2.1 | 2.0 | 2.1 |
| | | | | |
| Dry Adhesion (X adhesion)* | | | | |
| "X" rating | 4A | 3A | 3A | 3A |
| Filmbuild (mils) | 2.0 | 2.1 | 2.0 | 2.0 |
| | | | | |
| Wet Adhesion (X adhesion)* | | | | |
| Initial blister rating | 10 | 10 | 10 | 10 |
| tap water + 0 min recovery | 1A | 0A | 0A | 0A |
| tap water + 15 min recovery | 1A | 0A | 0A | 0A |
| tap water + 30 min recovery | 3A | 1A | 1A | 0A |
| tap water + 45 min recovery | 3A | 2A | 2A | 2A |
| tap water + 60 min recovery | 3A | 3A | 3A | 3A |
| | | | | |
| Pencil Hardness | H | F | F | F |
| Filmbuild (mils) | 2.0 | 2.1 | 2.0 | 2.0 |

(continued)

| | | | | |
|---|---|---|---|---|
| Wet Adhesion (X adhesion)* | | | | |
| | | | | |
| MEK Double Rubs | 146 | 128 | 118 | 100 |
| Filmbuild (mils) | 2.1 | 2.2 | 2.1 | 2.2 |
| | | | | |
| 187 h Salt Spray Exposure | | | | |
| Scribe creep (mm) | 4.3 | 6.5 | 7.0 | 7.0 |
| Blistering | 10 | 10 | 10 | 10 |
| *Clear 3M 600 tape; **1 hour with filter paper on precut x with watch glass cover | | | | |

## Claims

**1.** A polymer dispersion comprising a hyperbranched polymer, wherein the hyperbranched polymer comprises the reaction product of:

a partially neutralized, acid-functional resin; and
an epoxy;

wherein:

the partially neutralized, acid functional resin is the reaction product of an acid-functional resin and at least a functionalized amine;
the hyperbranched polymer comprises a carboxyl group, a hydroxyl group, an amino group, a uredo group, an acetoacetoxy group, a diacetone group, or a combination of any two or more thereof; and
the polymer dispersion is an aqueous, cross-linkable, polymer dispersion.

**2.** The polymer dispersion according toClaim 1, wherein the acid groups on the acid-functional resin are at least partially neutralized before the acid groups on the acid-functional resin are bonded to the epoxy.

**3.** The polymer dispersion according to Claim 1 or 2, wherein the acid-functional resin comprises a styrene-acrylic resin, a non-acrylic acid functional resin, a hybrid acrylic acid- functional resin, an acid functional polyester, an acid functional polyamide, an acid functional wax, or a hybrid thereof.

**4.** The polymer dispersion according to any of the claims 1 to 3, wherein at least about 5 mol% of the acid groups on the acid-functional resin are neutralized.

**5.** The polymer dispersion according to any of the claims 1 to 4, wherein up to about 95 mol% to about the acid groups on the acid-functional resin are bonded to the epoxy.

**6.** The polymer dispersion according to any of the claims 1 to 5, wherein the functionalized amine comprises a hydroxyl, cyano, carboxyl, nitro, heteroaryl group, or a combination of any two or more thereof.

**7.** The polymer dispersion according to any of the claims 1 to 6, wherein the functionalized amine comprises a compound represented by Formula I, Formula II, Formula III, or a mixture of any two or more thereof:

;

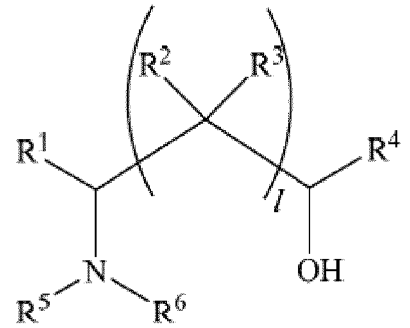

Formula I

:

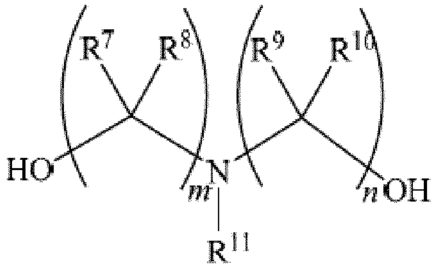

Formula II

;

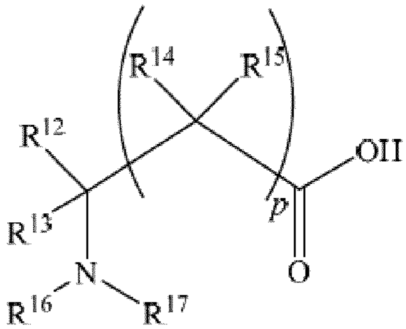

Formula III

;

wherein:

$R^1$, $R^2$, $R^3$, $R^4$, $R^5$, $R^6$, $R^7$, $R^8$, $R^9$, $R^{10}$, and $R^{11}$ are each independently a hydrogen or $C_1$-$C_6$ alkyl group;
$R^{12}$, $R^{13}$, $R^{14}$, $R^{15}$ $R^{16}$, and $R^{17}$, are each independently a hydrogen, hydroxyl, halo, carboxyl, amido, ester, thiol, alkylthio, guanadino, or a $C_1$-$C_6$ alkyl, $C_3$-$C_{10}$ cycloalkyl, $C_3$-$C_{10}$ heterocycloalkyl, $C_5$-$C_{12}$ aryl, or $C_5$-$C_{12}$ heteroaryl group;
*l* and *p* are each independently 0, 1, 2, 3, 4, or 5; and
*m* and *n* are each independently 1, 2, 3, 4, or 5.

**8.** The polymer dispersion according to any of the claims 1 to 7, wherein the acid-functional resin comprises the polymerization product of a mixture of monomers comprising:

a styrenic monomer; and
a monomer of formula V, maleic anhydride, itaconic acid, an ester of itaconic acid, or a mixture of any two or more thereof;

wherein:

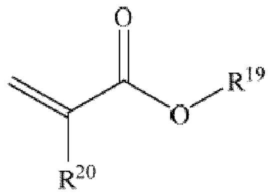

Formula V

;

$R^{20}$ is hydrogen or $CH_3$; and
$R^{19}$ is a hydrogen, alkyl, cycloalkyl, aryl, or alkaryl group.

**9.** A method of producing a polymer dispersion, the method comprising:

contacting an acid-functional resin in water with a functionalized amine to form a partially neutralized, acid-functional resin;
subsequently reacting the partially neutralized, acid-functional resin with an epoxy to produce a hyperbranched polymer;
wherein:

the hyperbranched polymer comprises a carboxyl group, hydroxyl group, amino group, uredo group, acetoacetoxy group, diacetone group, or a combination of any two or more thereof; and
the polymer dispersion is an aqueous, cross-linkable, polymer dispersion.

**10.** A method of producing a polymer dispersion, the method comprising:

contacting an acid-functional resin in water with an epoxy to produce a hyperbranched polymer;
subsequently reacting the hyperbranched polymer resin with a functionalized amine to form a partially neutralized, acid-functional resin;
wherein:

the hyperbranched polymer comprises a carboxyl group, hydroxyl group, amino group, uredo group, acetoacetoxy group, diacetone group, or a combination of any two or more thereof; and
the polymer dispersion is an aqueous, cross-linkable, polymer dispersion.

**11.** The method according to claim 9 or 10, wherein the acid-functional resin comprises a styrene- acrylic resin, a non-acrylic acid functional resin, a hybrid acrylic acid-functional resin, acid functional polyester, acid functional polyamide, acid functional wax, or hybrid thereof.

**12.** The method according to claim 9 or 10, wherein the functionalized amine comprises a compound represented by Formula I, Formula II, Formula III, or a mixture of any two or more thereof:

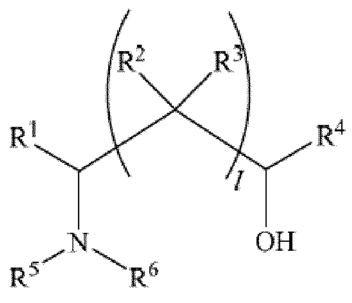

Formula I

;

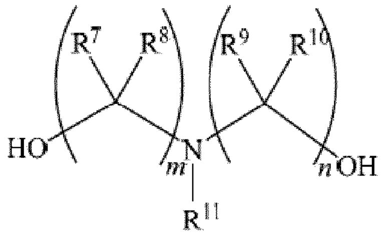

Formula II

;

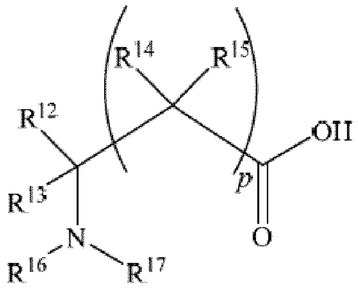

Formula III

;

wherein:

$R^1$, $R^2$, $R^3$, $R^4$, $R^5$, $R^6$, $R^7$, $R^8$, $R^9$, $R^{10}$, and $R^{11}$ are each independently a hydrogen or $C_1$-$C_6$ alkyl group;
$R^{12}$, $R^{13}$, $R^{14}$, $R^{15}$ $R^{16}$, and $R^{17}$, are each independently a hydrogen, hydroxyl, halo, carboxyl, amido, ester, thiol, alkylthio, guanadino, or a $C_1$-$C_6$ alkyl, $C_3$-$C_{10}$ cycloalkyl, $C_3$-$C_{10}$ heterocycloalkyl, $C_5$-$C_{12}$ aryl, or $C_5$-$C_{12}$ heteroaryl group;
*l* and *p* are each independently 0, 1, 2, 3, 4, or 5; and
*m* and *n* are each independently 1, 2, 3, 4, or 5.

**13.** The method according to claim 9 or 10, wherein the acid-functional resin comprises the polymerization product of a mixture of monomers comprising:

a styrenic monomer; and
a monomer of formula V, maleic anhydride, itaconic acid, an ester thereof, or a mixture of any two or more thereof;

wherein:

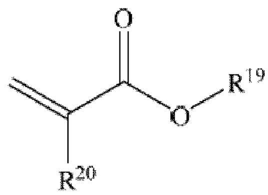

Formula V

;

$R^{20}$ is hydrogen or $CH_3$; and
$R^{19}$ is a hydrogen, alkyl, cycloalkyl, aryl, or alkaryl group.

**14.** A coating composition comprising the polymer dispersion of any one of claims 1-8 and a cross-linking agent.

**15.** A 2-pack coating kit comprising:

a first pack containing the polymer dispersion of any one of claims 1-8;
and a second pack containing a cross-linking agent.

**Patentansprüche**

1. Polymerdispersion, die hyperverzweigtes Polymer umfasst, wobei das hyperverzweigte Polymer das Reaktionsprodukt von:

   einem teilweise neutralisierten, säurefunktionellen Harz; und
   einem Epoxid;

   umfasst, wobei:

   es sich bei dem teilweise neutralisierten, säurefunktionellen Harz um das Reaktionsprodukt von einem säurefunktionellen Harz und wenigstens einem funktionalisierten Amin handelt;
   das hyperverzweigte Polymer eine Carboxylgruppe, eine Hydroxylgruppe, eine Aminogruppe, eine Uredogruppe, eine Acetoacetoxygruppe, eine Diacetongruppe oder eine Kombination von zwei oder mehr davon umfasst; und
   es sich bei der Polymerdispersion um eine wässrige, vernetzbare Polymerdispersion handelt.

2. Polymerdispersion nach Anspruch 1, wobei die Säuregruppen an dem säurefunktionellen Harz wenigstens teilweise neutralisiert werden, bevor die Säuregruppen an dem säurefunktionellen Harz an das Epoxid gebunden werden.

3. Polymerdispersion nach Anspruch 1 oder 2, wobei das säurefunktionelle Harz ein Styrol-Acryl-Harz, ein säurefunktionelles Nichtacryl-Harz, ein säurefunktionelles Acryl-Hybridharz, einen säurefunktionellen Polyester, ein säurefunktionelles Polyamid, ein säurefunktionelles Wachs oder einen Hybrid davon umfasst.

4. Polymerdispersion nach einem der Ansprüche 1 bis 3, wobei wenigstens etwa 5 mol-% der Säuregruppen an dem säurefunktionellen Harz neutralisiert sind.

5. Polymerdispersion nach einem der Ansprüche 1 bis 4, wobei bis zu etwa 95 mol-% bis etwa der Säuregruppen an dem säurefunktionellen Harz an das Epoxid gebunden sind.

6. Polymerdispersion nach einem der Ansprüche 1 bis 5, wobei das funktionalisierte Amin eine Hydroxyl-, Cyano-, Carboxyl-, Nitro-, Heteroarylgruppe oder eine Kombination von zwei oder mehr davon umfasst.

7. Polymerdispersion nach einem der Ansprüche 1 bis 6, wobei das funktionalisierte Amin eine durch Formel I, Formel II, Formel III wiedergegebene Verbindung oder eine Mischung von zwei oder mehr davon umfasst:

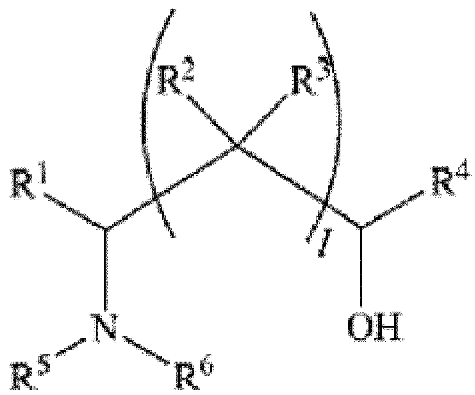

Formel I;

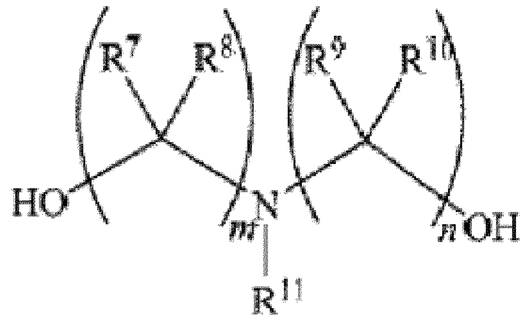

Formel II;

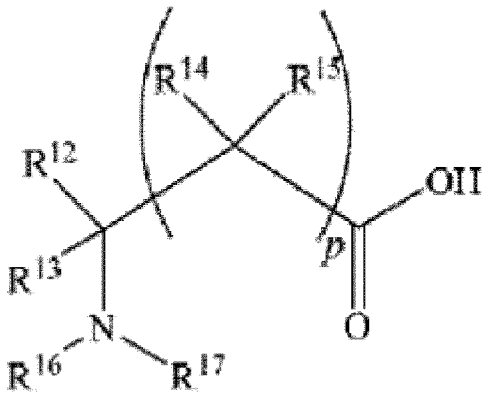

Formel III;

wobei:

$R^1$, $R^2$, $R^3$, $R^4$, $R^5$, $R^6$, $R^7$, $R^8$, $R^9$, $R^{10}$, und $R^{11}$ jeweils unabhängig für eine Wasserstoff- oder eine $C_1$-$C_6$-Alkylgruppe stehen;
$R^{12}$, $R^{13}$, $R^{14}$, $R^{15}$, $R^{16}$ und $R^{17}$ jeweils unabhängig für eine Wasserstoff-, Hydroxyl-, Halogen-, Carboxyl-, Amido-, Ester-, Thiol-, Alkylthio-, Guanadino- oder eine $C_1$-$C_6$-Alkyl-, $C_3$-$C_{10}$-Cycloalkyl-, $C_3$-$C_{10}$)-Heterocycloalkyl-, $C_5$-$C_{12}$-Aryl- oder $C_5$-$C_{12}$-Heteroarylgruppe stehen;
*l* und *p* jeweils unabhängig für 0, 1, 2, 3, 4 oder 5 stehen; und
*m* und n jeweils unabhängig für 1, 2, 3, 4 oder 5 stehen;

**8.** Polymerdispersion nach einem der Ansprüche 1 bis 7, wobei das säurefunktionelle Harz das Polymerisationsprodukt von einer Mischung aus Monomeren umfasst, die:

ein Styrolmonomer; und
ein Monomer der Formel V, Maleinsäureanhydrid, Itaconsäure, einen Ester von Itaconsäure oder eine Mischung von zwei oder mehr davon umfasst;

wobei:

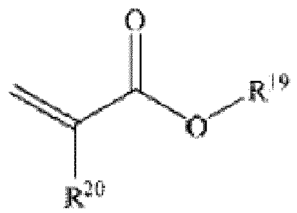

Formel V;

$R^{20}$ für Wasserstoff oder $CH_3$ steht und

$R^{19}$ für eine Wasserstoff-, Alkyl-, Cycloalkyl-, Aryl- oder Alkarylgruppe steht.

**9.** Verfahren zur Herstellung einer Polymerdispersion, wobei man bei dem Verfahren:

ein säurefunktionelles Harz in Wasser mit einem funktionalisierten Amin zur Bildung eines teilweise neutralisierten, säurefunktionellen Harzes in Kontakt bringt;
anschließend das teilweise neutralisierte, säurefunktionelle Harz mit einem Epoxid zur Herstellung eines hyperverzweigten Polymers umsetzt; wobei:

das hyperverzweigte Polymer eine Carboxylgruppe, Hydroxylgruppe, Aminogruppe, Uredogruppe, Acetoacetoxygruppe, Diacetongruppe oder eine Kombination von zwei oder mehr davon umfasst; und
es sich bei der Polymerdispersion um eine wässrige, vernetzbare Polymerdispersion handelt.

**10.** Verfahren zur Herstellung einer Polymerdispersion, wobei man bei dem Verfahren:

ein säurefunktionelles Harz in Wasser mit einem Epoxid zur Herstellung eines hyperverzweigten Polymers in Kontakt bringt;
anschließend das hyperverzweigte Polymerharz mit einem funktionalisierten Amin zur Bildung eines teilweise neutralisierten, säurefunktionellen Harzes umsetzt; wobei:

das hyperverzweigte Polymer eine Carboxylgruppe, Hydroxylgruppe, Aminogruppe, Uredogruppe, Acetoacetoxygruppe, Diacetongruppe oder eine Kombination von zwei oder mehr davon umfasst; und
es sich bei der Polymerdispersion um eine wässrige, vernetzbare Polymerdispersion handelt.

**11.** Verfahren nach Anspruch 9 oder 10, wobei das säurefunktionelle Harz ein Styrol-Acryl-Harz, ein säurefunktionelles Nichtacryl-Harz, ein säurefunktionelles Acryl-Hybridharz, säurefunktionellen Polyester, säurefunktionelles Polyamid, säurefunktionelles Wachs oder Hybrid davon umfasst.

**12.** Verfahren nach Anspruch 9 oder 10, wobei das funktionalisierte Amin eine durch Formel I, Formel II, Formel III wiedergegebene Verbindung oder eine Mischung von zwei oder mehr davon umfasst:

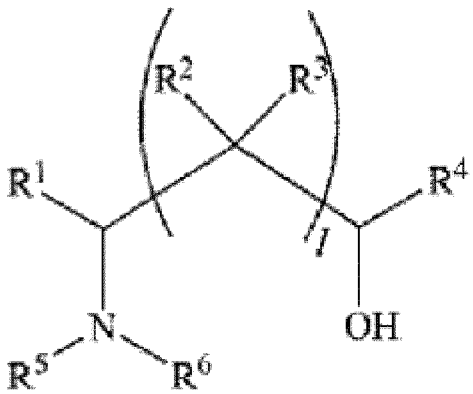

Formel I;

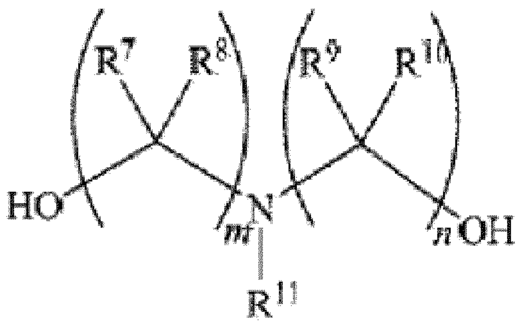

Formel II;

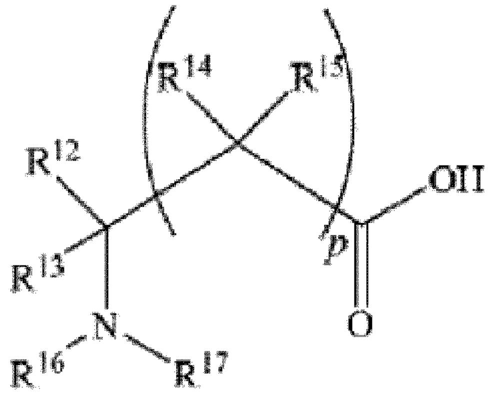

Formel III;

wobei:

$R^1$, $R^2$, $R^3$, $R^4$, $R^5$, $R^6$, $R^7$, $R^8$, $R^9$, $R^{10}$, und $R^{11}$ jeweils unabhängig für eine Wasserstoff- oder eine $C_1$-$C_6$-Alkylgruppe stehen;
$R^{12}$, $R^{13}$, $R^{14}$, $R^{15}$, $R^{16}$ und $R^{17}$ jeweils unabhängig für eine Wasserstoff-, Hydroxyl-, Halogen-, Carboxyl-, Amido-, Ester-, Thiol-, Alkylthio-, Guanadino- oder eine $C_1$-$C_6$-Alkyl-, $C_3$-$C_{10}$-Cycloalkyl-, $C_3$-$C_{10}$-Heterocycloalkyl-, $C_5$-$C_{12}$-Aryl- oder $C_5$-$C_{12}$-Heteroarylgruppe stehen;
*l* und *p* jeweils unabhängig für 0, 1, 2, 3, 4 oder 5 stehen; und
*m* und n jeweils unabhängig für 1, 2, 3, 4 oder 5 stehen.

**13.** Verfahren nach Anspruch 9 oder 10, wobei das säurefunktionelle Harz das Polymerisationsprodukt von einer Mischung aus Monomeren umfasst, die:

ein Styrolmonomer; und
ein Monomer der Formel V, Maleinsäureanhydrid, Itaconsäure, einen Ester davon oder eine Mischung von zwei oder mehr davon umfasst;

wobei:

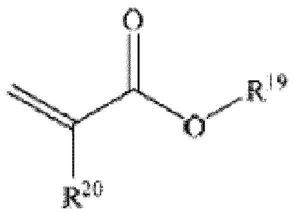

Formel V;

$R^{20}$ für Wasserstoff oder $CH_3$ steht; und
$R^{19}$ für eine Wasserstoff-, Alkyl-, Cycloalkyl-, Aryl- oder Alkarylgruppe steht.

**14.** Beschichtungszusammensetzung, umfassend die Polymerdispersion nach einem der Ansprüche 1-8 und einen Vernetzer.

**15.** Beschichtungskit als 2-Komponenten-Gebinde, umfassend:

ein erstes Gebinde, das die Polymerdispersion nach einem der Ansprüche 1-8 enthält; und
ein zweites Gebinde, das einen Vernetzer enthält.

## Revendications

1. Dispersion de polymère comprenant un polymère hyperramifié, le polymère hyperramifié comprenant le produit de réaction de :

   une résine fonctionnalisée par acide, partiellement neutralisée ; et
   un époxy ;
   la résine fonctionnalisée par acide, partiellement neutralisée étant le produit de réaction d'une résine fonctionnalisée par acide et d'au moins une amine fonctionnalisée ;
   le polymère hyperramifié comprenant un groupe carboxyle, un groupe hydroxyle, un groupe amino, un groupe uréido, un groupe acétoacétoxy, un groupe diacétone, ou une combinaison de deux quelconques ou plus de ceux-ci ; et
   la dispersion de polymère étant une dispersion de polymère aqueuse, réticulable.

2. Dispersion de polymère selon la revendication 1, les groupes de type acide sur la résine fonctionnalisée par acide étant au moins partiellement neutralisés avant que les groupes de type acide sur la résine fonctionnalisée par acide ne soit liés à l'époxy.

3. Dispersion de polymère selon la revendication 1 ou 2, la résine fonctionnalisée par acide comprenant une résine de styrène-acrylique, une résine fonctionnalisée non par acide acrylique, une résine fonctionnalisée par acide acrylique hybride, un polyester fonctionnalisé par acide, un polyamide fonctionnalisé par acide, une cire fonctionnalisée par acide, ou un hybride correspondant.

4. Dispersion de polymère selon l'une quelconque des revendications 1 à 3, au moins environ 5 % en moles des groupes de type acide sur la résine fonctionnalisée par acide étant neutralisés.

5. Dispersion de polymère selon l'une quelconque des revendications 1 à 4, jusqu'à environ 95 % en moles à environ des groupes de type acide sur la résine fonctionnalisée par acide étant liés à l'époxy.

6. Dispersion de polymère selon l'une quelconque des revendications 1 à 5, l'amine fonctionnalisée comprenant un groupe hydroxyle, cyano, carboxyle, nitro, hétéroaryle, ou une combinaison de deux quelconques ou plus de ceux-ci.

7. Dispersion de polymère selon l'une quelconque des revendications 1 à 6, l'amine fonctionnalisée comprenant un composé représenté par la Formule I, la Formule II, la Formule III, ou un mélange de deux quelconques ou plus de celles-ci :

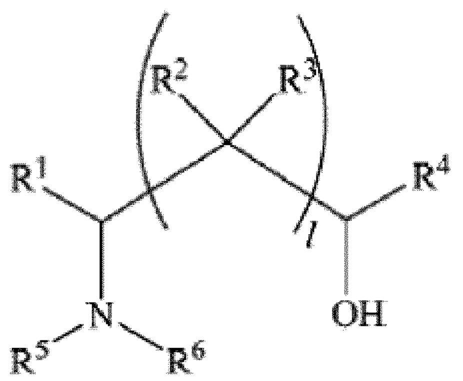

Formule I ;

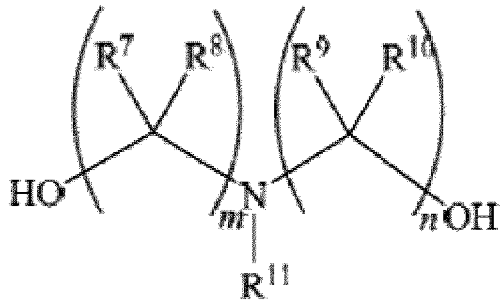

Formule II ;

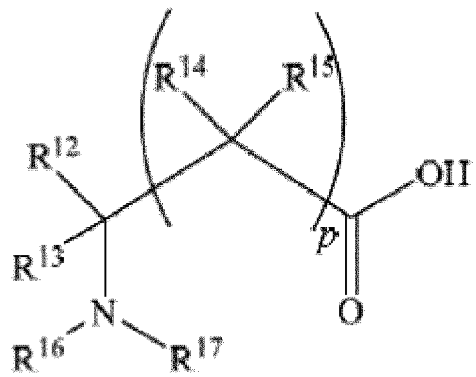

Formule III ;

$R^1$, $R^2$, $R^3$, $R^4$, $R^5$, $R^6$, $R^7$, $R^8$, $R^9$, $R^{10}$, et $R^{11}$ étant chacun indépendamment un groupe hydrogène ou $C_{1-6}$ alkyle ;
$R^{12}$, $R^{13}$, $R^{14}$, $R^{15}$, $R^{16}$, et $R^{17}$, étant chacun indépendamment un hydrogène, un hydroxyle, un halogéno, un carboxyle, un amido, un ester, un thiol, un alkylthio, un guanadino, ou un groupe $C_{1-6}$ alkyle, $C_{3-10}$ cycloalkyle, $C_{3-10}$ hétérocycloalkyle, $C_{5-12}$ aryle, ou $C_{5-12}$ hétéroaryle ;
*l* et *p* étant chacun indépendamment 0, 1, 2, 3, 4, ou 5 ; et
*m* et n étant chacun indépendamment 1, 2, 3, 4, ou 5.

**8.** Dispersion de polymère selon l'une quelconque des revendications 1 à 7, la résine fonctionnalisée par acide comprenant le produit de polymérisation d'un mélange de monomères comprenant :

un monomère styrénique ; et
un monomère de formule V, l'anhydride maléique, l'acide itaconique, un ester d'acide itaconique, ou un mélange de deux quelconques ou plus de ceux-ci ;

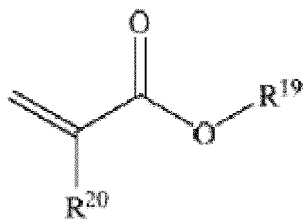

Formule V ;

$R^{20}$ étant hydrogène ou $CH_3$ ; et
$R^{19}$ étant un groupe hydrogène, alkyle, cycloalkyle, aryle, ou alkaryle.

**9.** Procédé de production d'une dispersion de polymère, le procédé comprenant :

la mise en contact d'une résine fonctionnalisée par acide dans de l'eau avec une amine fonctionnalisée pour

former une résine fonctionnalisée par acide, partiellement neutralisée ;
subséquemment, la mise en réaction de la résine fonctionnalisée par acide, partiellement neutralisée avec un époxy pour produire un polymère hyperramifié ;

le polymère hyperramifié comprenant un groupe carboxyle, un groupe hydroxyle, un groupe amino, un groupe uréido, un groupe acétoacétoxy, un groupe diacétone, ou une combinaison de deux quelconques ou plus de ceux-ci ; et
la dispersion de polymère étant une dispersion de polymère aqueuse, réticulable.

**10.** Procédé de production d'une dispersion de polymère, le procédé comprenant :

la mise en contact d'une résine fonctionnalisée par acide dans de l'eau avec un époxy pour produire un polymère hyperramifié ;
subséquemment, la mise en réaction de la résine de polymère hyperramifié avec une amine fonctionnalisée pour former une résine fonctionnalisée par acide, partiellement neutralisée ;

le polymère hyperramifié comprenant un groupe carboxyle, un groupe hydroxyle, un groupe amino, un groupe uréido, un groupe acétoacétoxy, un groupe diacétone, ou une combinaison de deux quelconques ou plus de ceux-ci ; et
la dispersion de polymère étant une dispersion de polymère aqueuse, réticulable.

**11.** Procédé selon la revendication 9 ou 10, la résine fonctionnalisée par acide comprenant une résine de styrène-acrylique, une résine fonctionnalisée non par acide acrylique, une résine fonctionnalisée par acide acrylique hybride, un polyester fonctionnalisé par acide, un polyamide fonctionnalisé par acide, une cire fonctionnalisée par acide, ou un hybride correspondant.

**12.** Procédé selon la revendication 9 ou 10, l'amine fonctionnalisée comprenant un composé représenté par la Formule I, la Formule II, la Formule III, ou un mélange de deux quelconques ou plus de celles-ci :

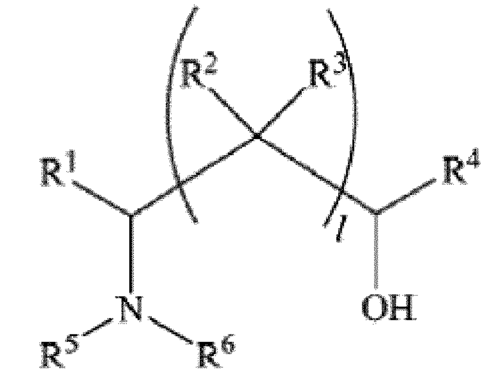

Formule I ;

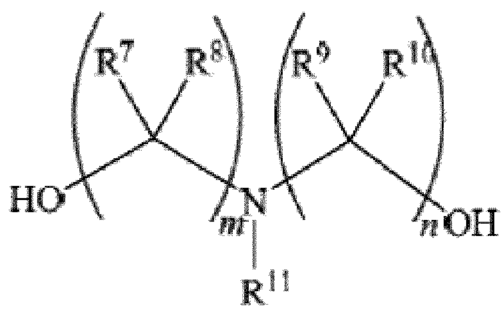

Formule II ;

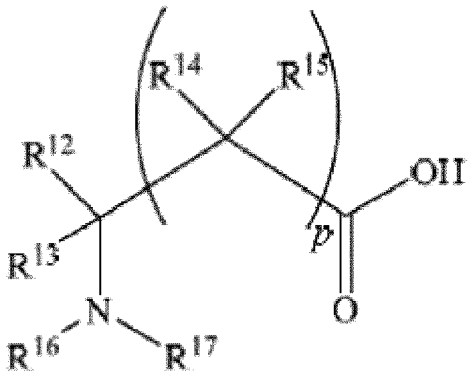

Formule III ;

$R^1$, $R^2$, $R^3$, $R^4$, $R^5$, $R^6$, $R^7$, $R^8$, $R^9$, $R^{10}$, et $R^{11}$ étant chacun indépendamment un groupe hydrogène ou $C_{1-6}$ alkyle ; $R^{12}$, $R^{13}$, $R^{14}$, $R^{15}$, $R^{16}$, et $R^{17}$, étant chacun indépendamment un hydrogène, un hydroxyle, un halogéno, un carboxyle, un amido, un ester, un thiol, un alkylthio, un guanadino, ou un groupe $C_{1-6}$ alkyle, $C_{3-10}$ cycloalkyle, $C_{3-10}$ hétérocycloalkyle, $C_{5-12}$ aryle, ou $C_{5-12}$ hétéroaryle ;
*l* et *p* étant chacun indépendamment 0, 1, 2, 3, 4, ou 5 ; et
*m* et *n* étant chacun indépendamment 1, 2, 3, 4, ou 5.

**13.** Procédé selon la revendication 9 ou 10, la résine fonctionnalisée par acide comprenant le produit de polymérisation d'un mélange de monomères comprenant :

un monomère styrénique ; et
un monomère de formule V, l'anhydride maléique, l'acide itaconique, un ester correspondant, ou un mélange de deux quelconques ou plus de ceux-ci ;

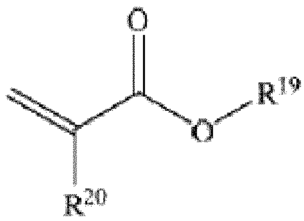

Formule V

$R^{20}$ étant hydrogène ou $CH_3$ ; et
$R^{19}$ étant un groupe hydrogène, alkyle, cycloalkyle, aryle, ou alkaryle.

**14.** Composition de revêtement comprenant la dispersion de polymère selon l'une quelconque des revendications 1 à 8 et un agent de réticulation.

**15.** Kit de revêtement à 2 conditionnements comprenant :

un premier conditionnement contenant la dispersion de polymère selon l'une quelconque des revendications 1 à 8 ;
et un deuxième conditionnement contenant un agent de réticulation.

FIG. 1

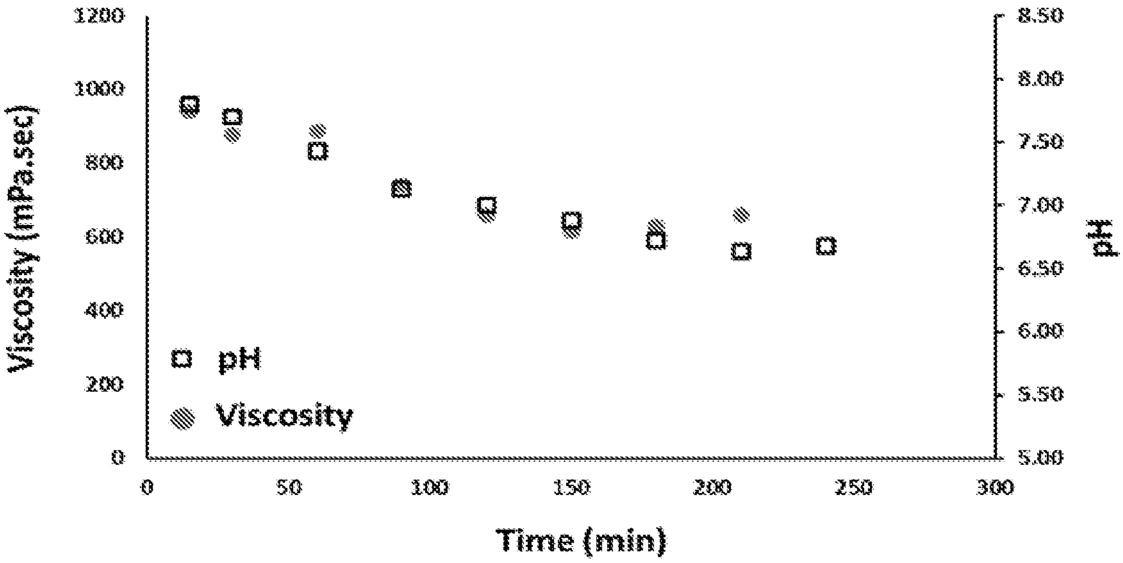
Viscosity (mPa.sec)
pH
Time (min)
pH
Viscosity
0
200
400
600
800
1000
1200
0
50
100
150
200
250
300
5.00
5.50
6.00
6.50
7.00
7.50
8.00
8.50

FIG. 2

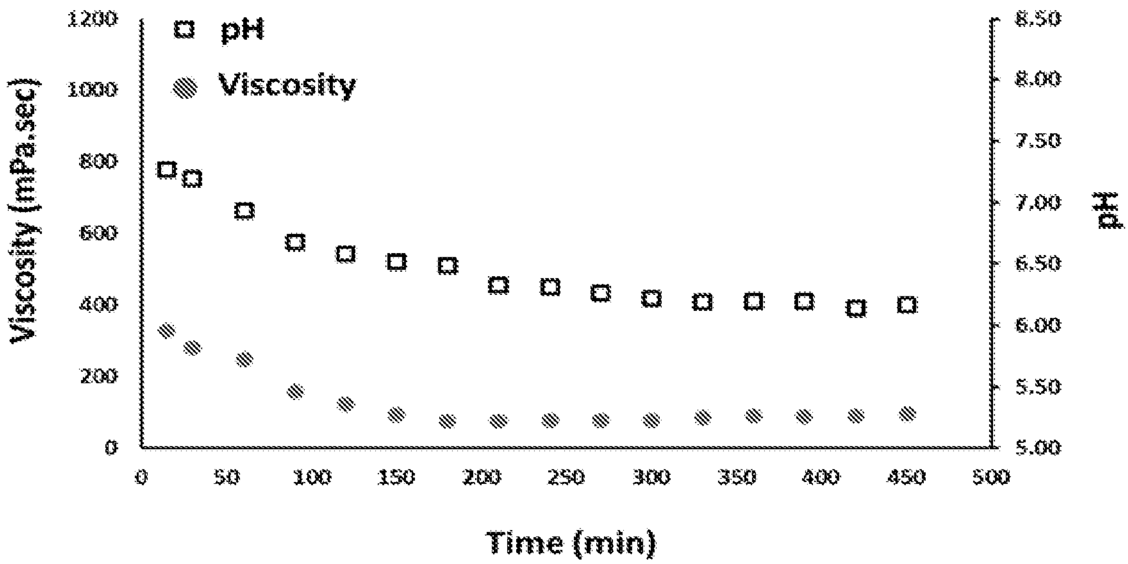
Viscosity (mPa.sec)
pH
Time (min)
pH
Viscosity
0
200
400
600
800
1000
1200
0
50
100
150
200
250
300
350
400
450
500
5.00
5.50
6.00
6.50
7.00
7.50
8.00
8.50

**FIG. 3**

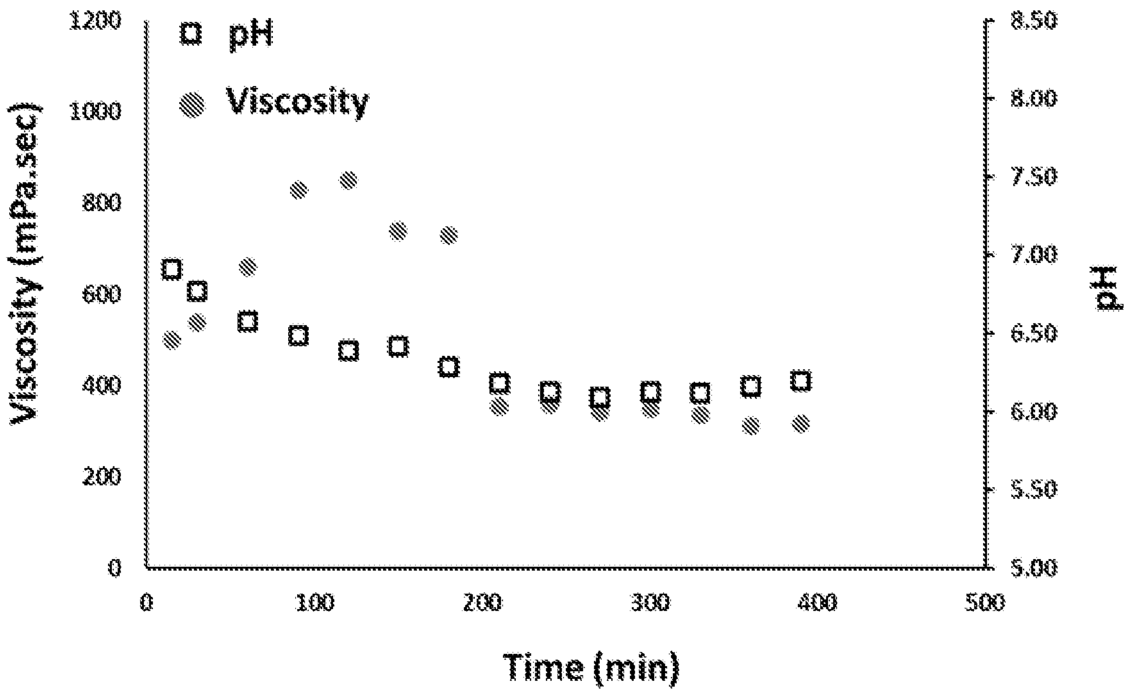
pH
Viscosity
Viscosity (mPa.sec)
pH
Time (min)
0
200
400
600
800
1000
1200
5.00
5.50
6.00
6.50
7.00
7.50
8.00
8.50
0
100
200
300
400
500

FIG. 4

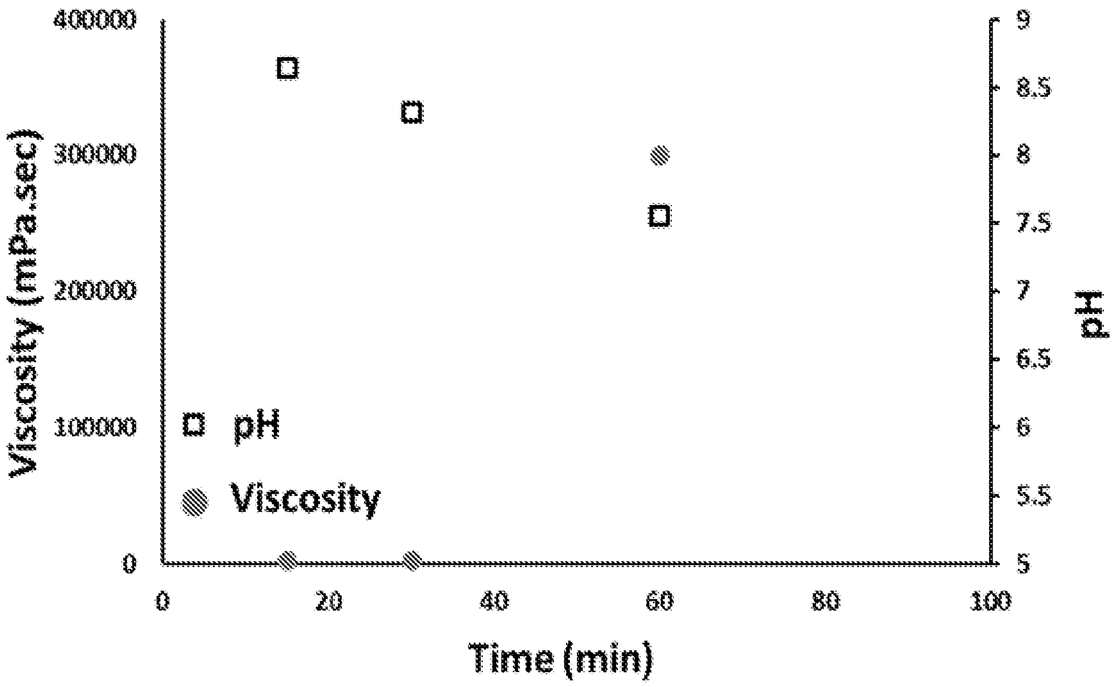
Viscosity (mPa.sec)
400000
300000
200000
100000
0
pH
9
8.5
8
7.5
7
6.5
6
5.5
5
pH
Viscosity
0
20
40
60
80
100
Time (min)

FIG. 5A

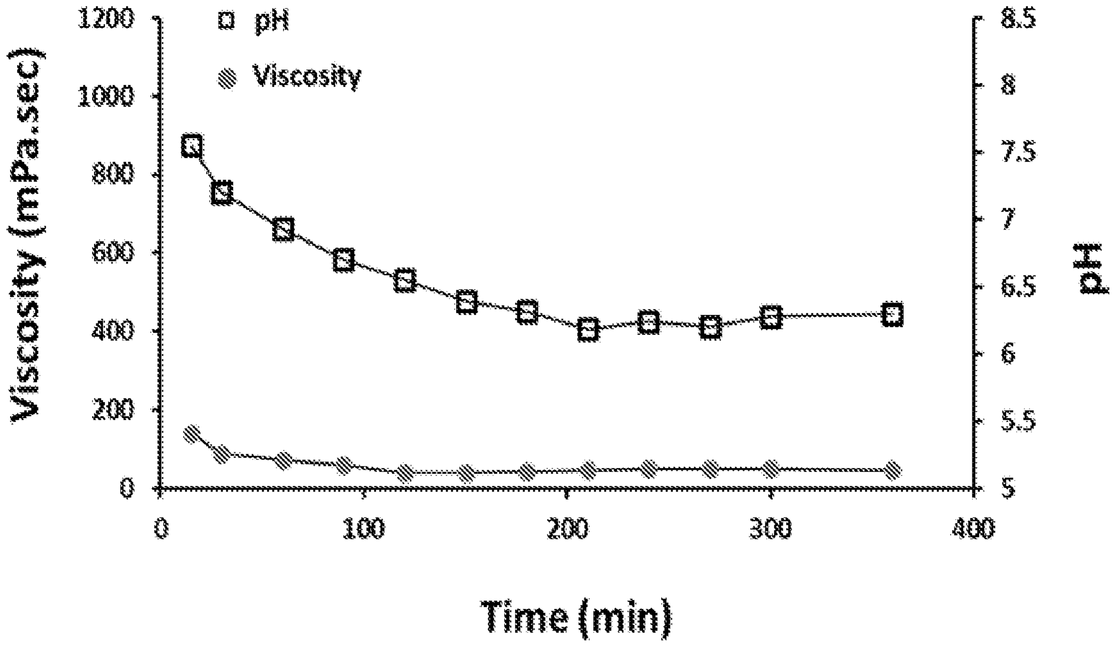
pH
Viscosity
Viscosity (mPa.sec)
pH
Time (min)
0
200
400
600
800
1000
1200
100
300
5
5.5
6
6.5
7
7.5
8
8.5

FIG. 5B

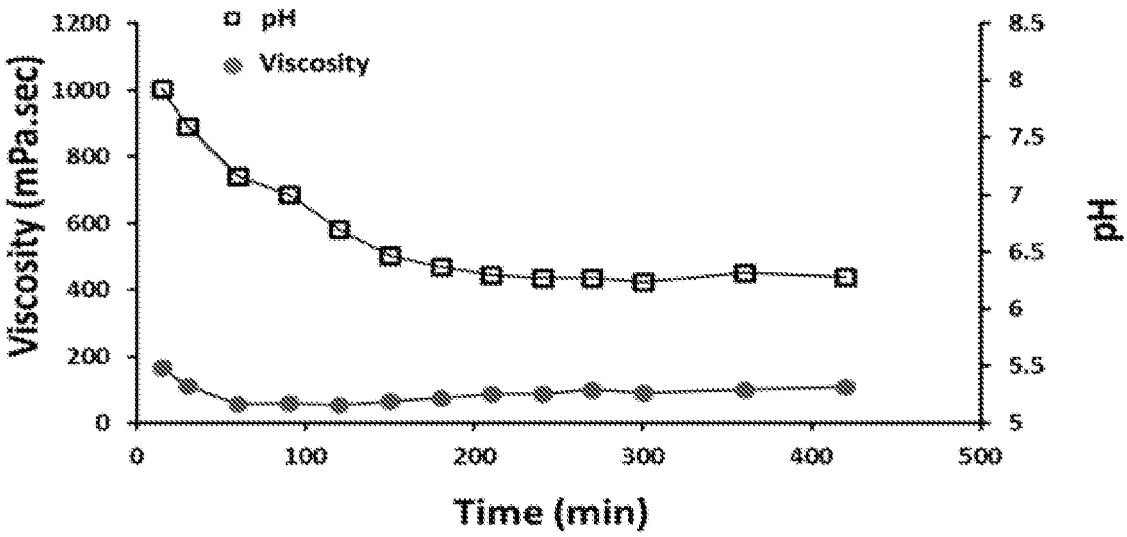
pH
Viscosity
Viscosity (mPa.sec)
pH
Time (min)
0
200
400
600
800
1000
1200
100
300
500
5
5.5
6
6.5
7
7.5
8
8.5

FIG. 5C

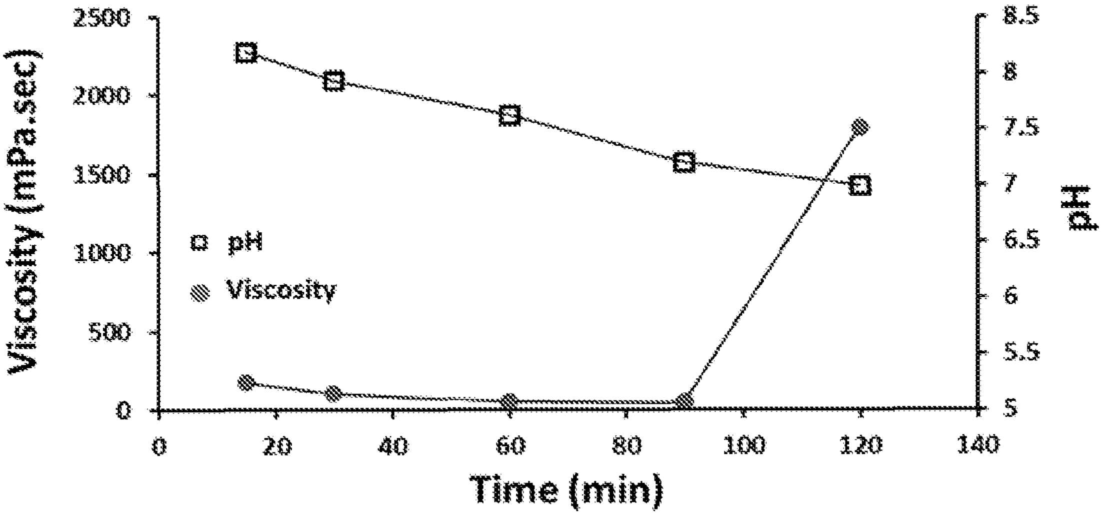
Viscosity (mPa.sec)
2500
2000
1500
1000
500
0
pH
Viscosity
0
20
40
60
80
100
120
140
Time (min)
8.5
8
7.5
7
6.5
6
5.5
5
pH

FIG. 6

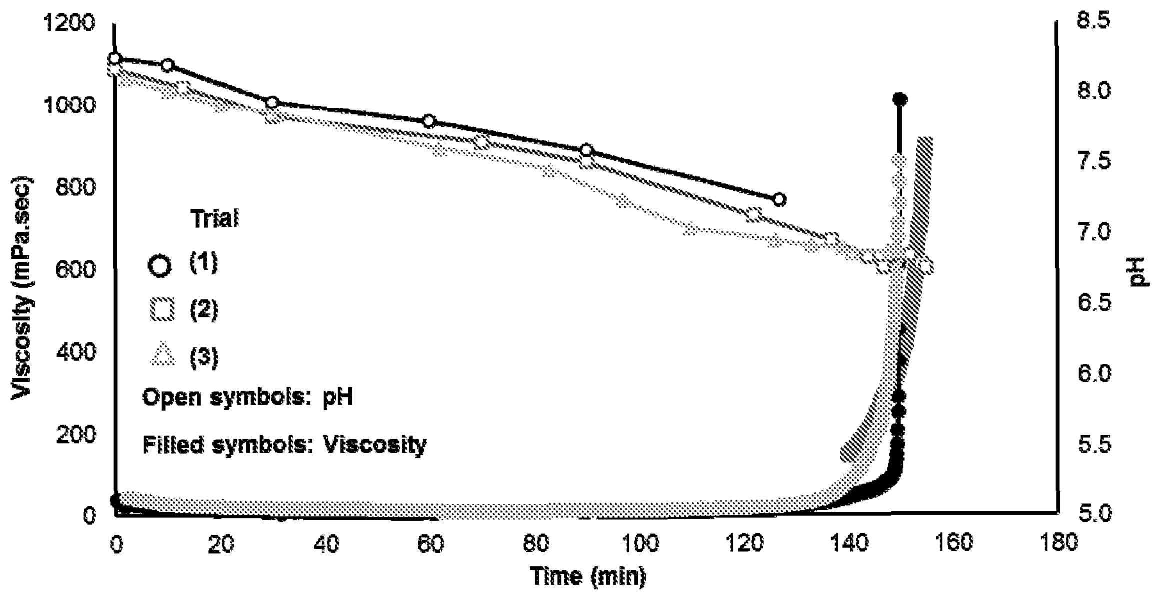
Viscosity (mPa.sec)
1200
1000
800
600
400
200
0
Trial
(1)
(2)
(3)
Open symbols: pH
Filled symbols: Viscosity
0
20
40
60
80
100
120
140
160
180
Time (min)
8.5
8.0
7.5
7.0
6.5
6.0
5.5
5.0
pH

FIG. 7

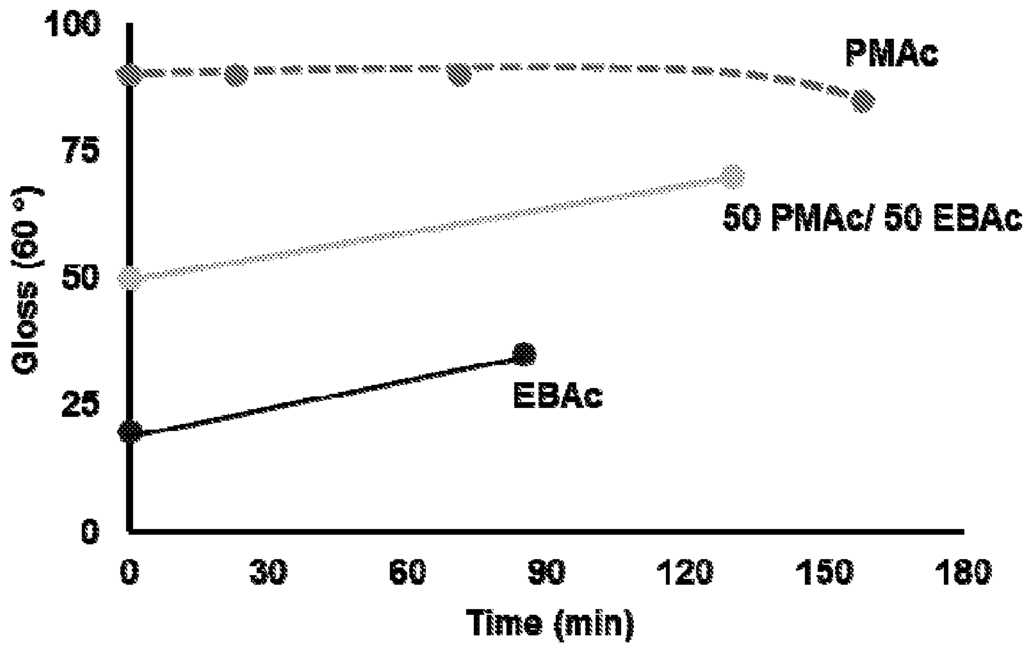
100
75
50
25
0
Gloss (60 °)
0
30
60
90
120
150
180
Time (min)
PMAc
50 PMAc/ 50 EBAc
EBAc

FIG. 8A

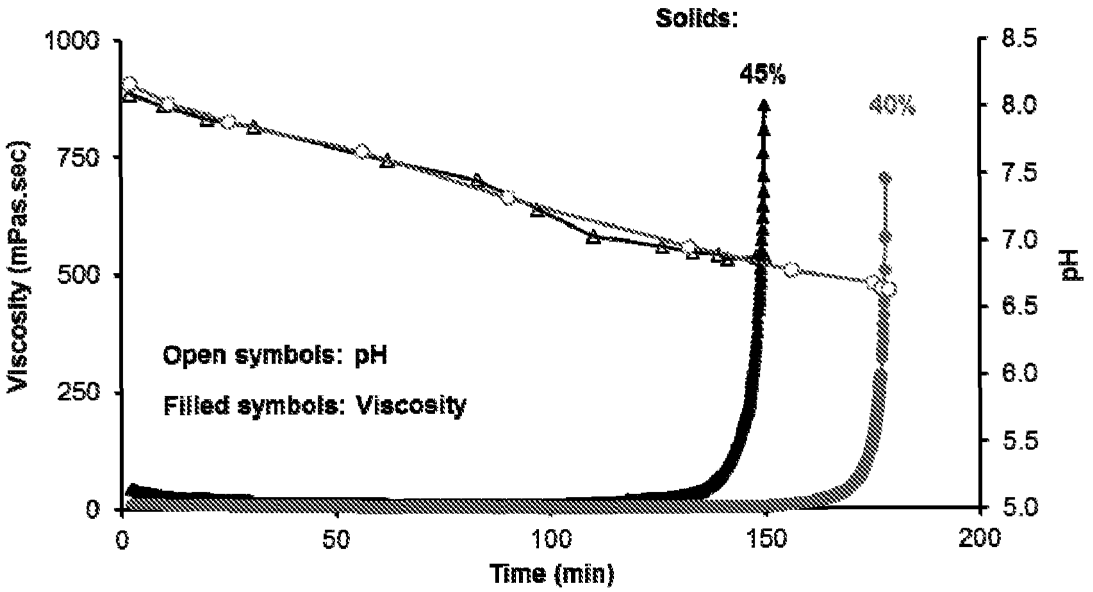
Solids:
45%
40%
Viscosity (mPas.sec)
pH
Open symbols: pH
Filled symbols: Viscosity
Time (min)
1000
750
500
250
0
8.5
8.0
7.5
7.0
6.5
6.0
5.5
5.0
0
50
100
150
200

FIG. 8B

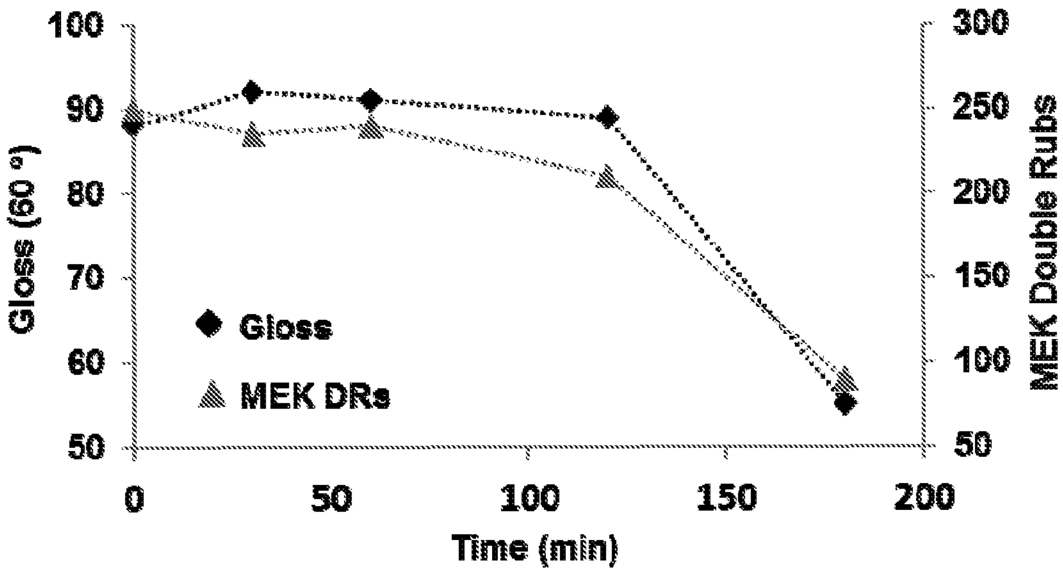
Gloss (60 °)
MEK Double Rubs
Gloss
MEK DRs
Time (min)
100
90
80
70
60
50
300
250
200
150
100
50
0
50
100
150
200

FIG. 9A

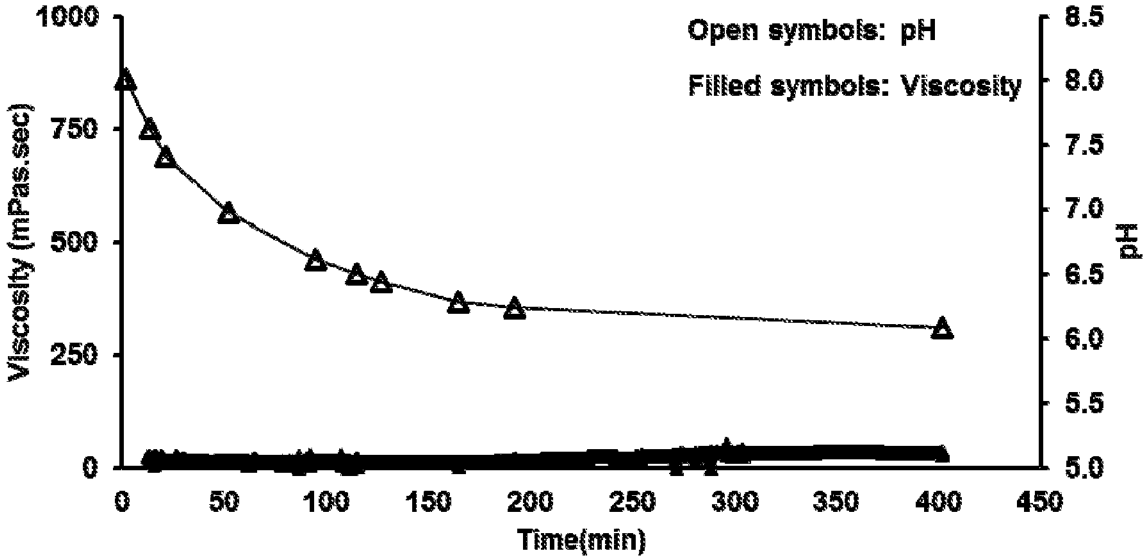
1000
750
500
250
0
Viscosity (mPas.sec)
8.5
8.0
7.5
7.0
6.5
6.0
5.5
5.0
pH
0
50
100
150
200
250
300
350
400
450
Time(min)
Open symbols: pH
Filled symbols: Viscosity

FIG. 9B

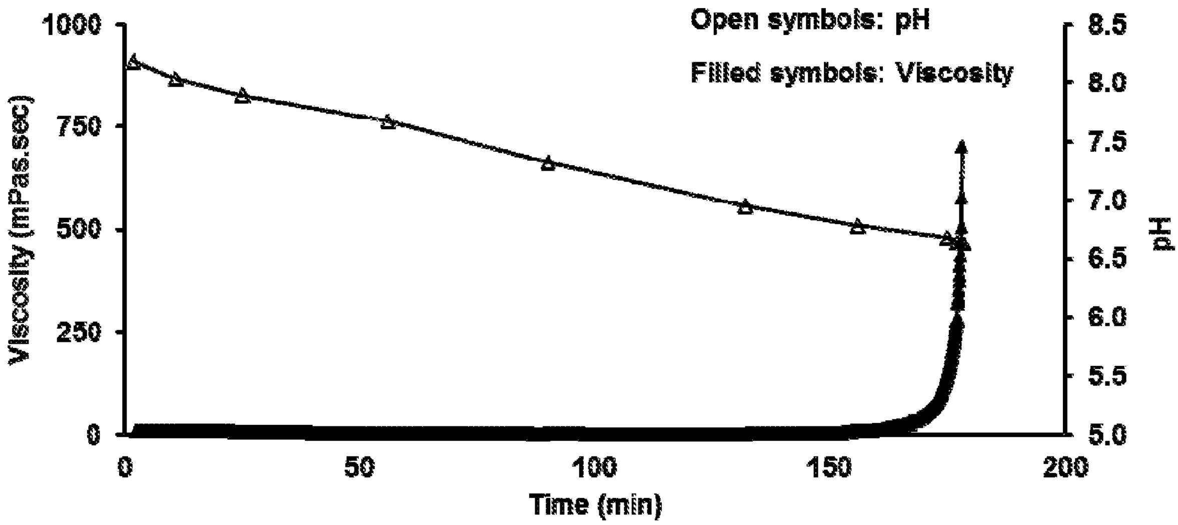
Open symbols: pH
Filled symbols: Viscosity
Viscosity (mPas.sec)
1000
750
500
250
0
pH
8.5
8.0
7.5
7.0
6.5
6.0
5.5
5.0
0
50
100
150
200
Time (min)

FIG. 10A

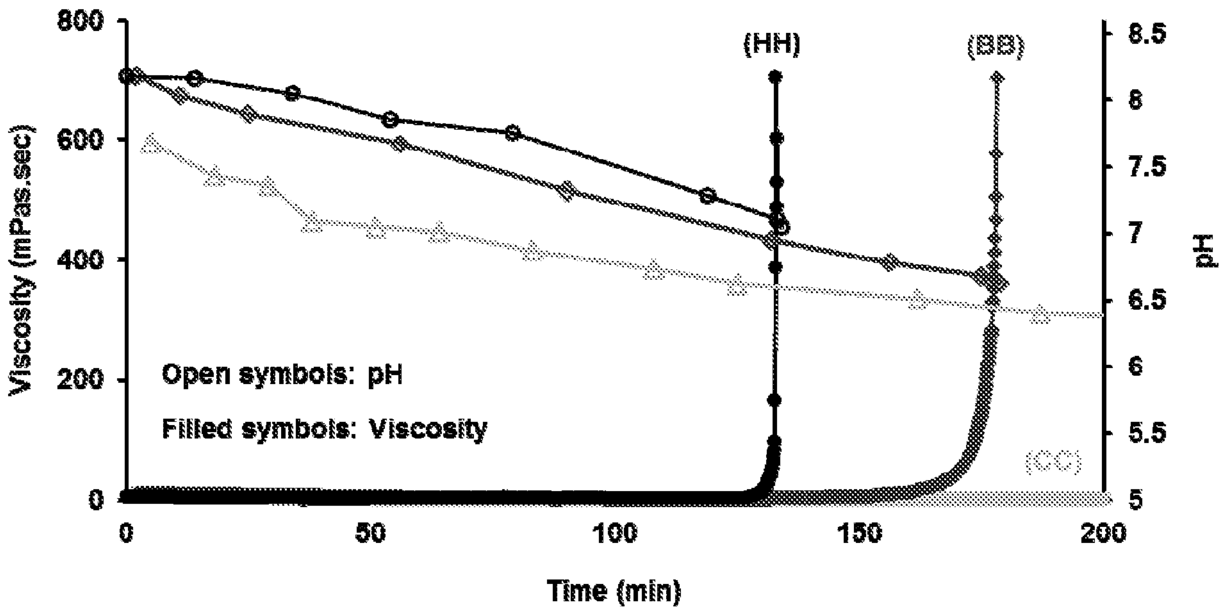

800
600
400
200
0
Viscosity (mPas.sec)
(HH)
(BB)
(CC)
8.5
8
7.5
7
6.5
6
5.5
5
pH
Open symbols: pH
Filled symbols: Viscosity
0
50
100
150
200
Time (min)

FIG. 10B

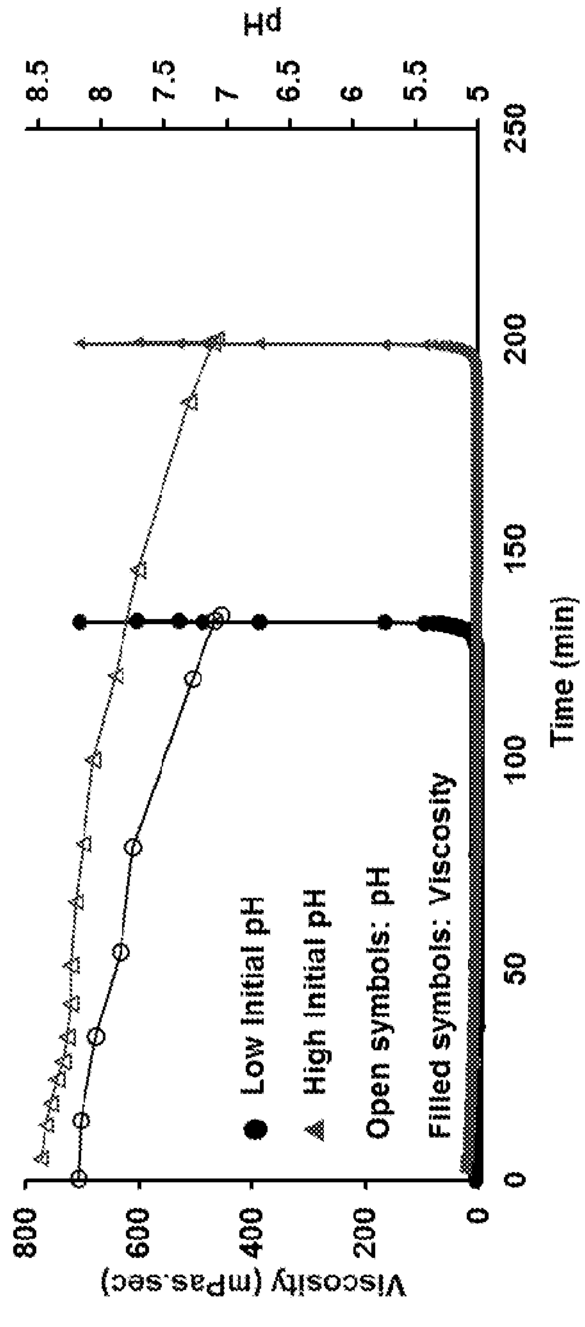
Low Initial pH
High Initial pH
Open symbols: pH
Filled symbols: Viscosity
Viscosity (mPas.sec)
pH
Time (min)
0
50
100
150
200
250
200
400
600
800
5
5.5
6
6.5
7
7.5
8
8.5

FIG. 11A

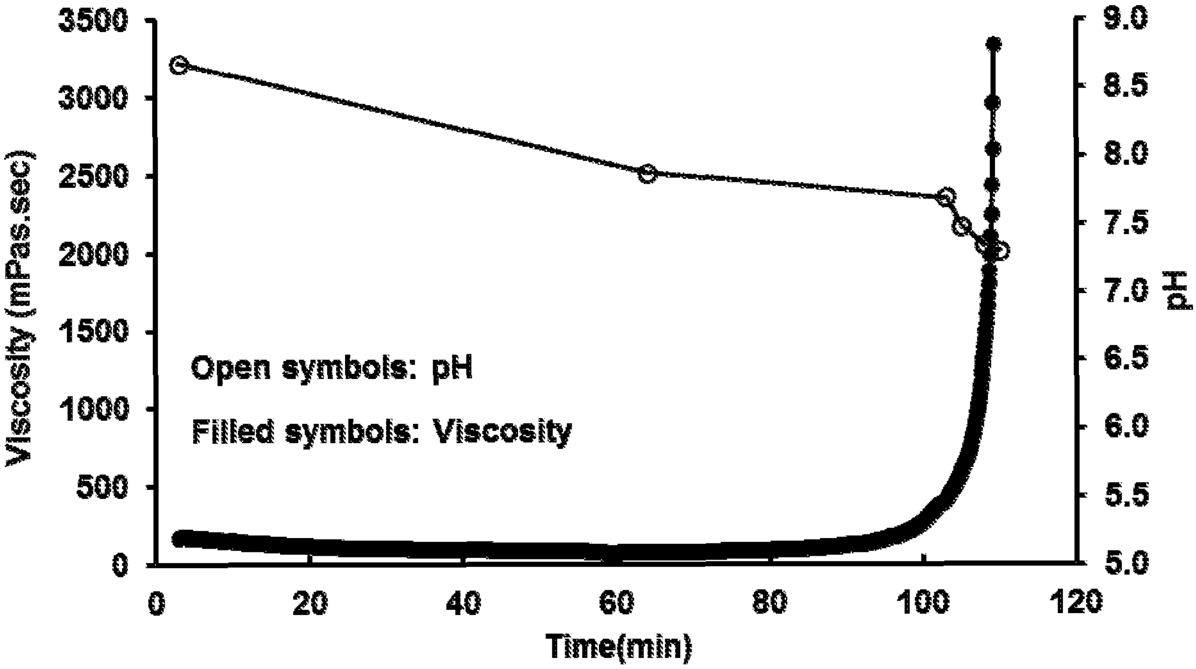
Open symbols: pH
Filled symbols: Viscosity
Viscosity (mPas.sec)
pH
Time(min)
3500
3000
2500
2000
1500
1000
500
0
9.0
8.5
8.0
7.5
7.0
6.5
6.0
5.5
5.0
0
20
40
60
80
100
120

FIG. 11B

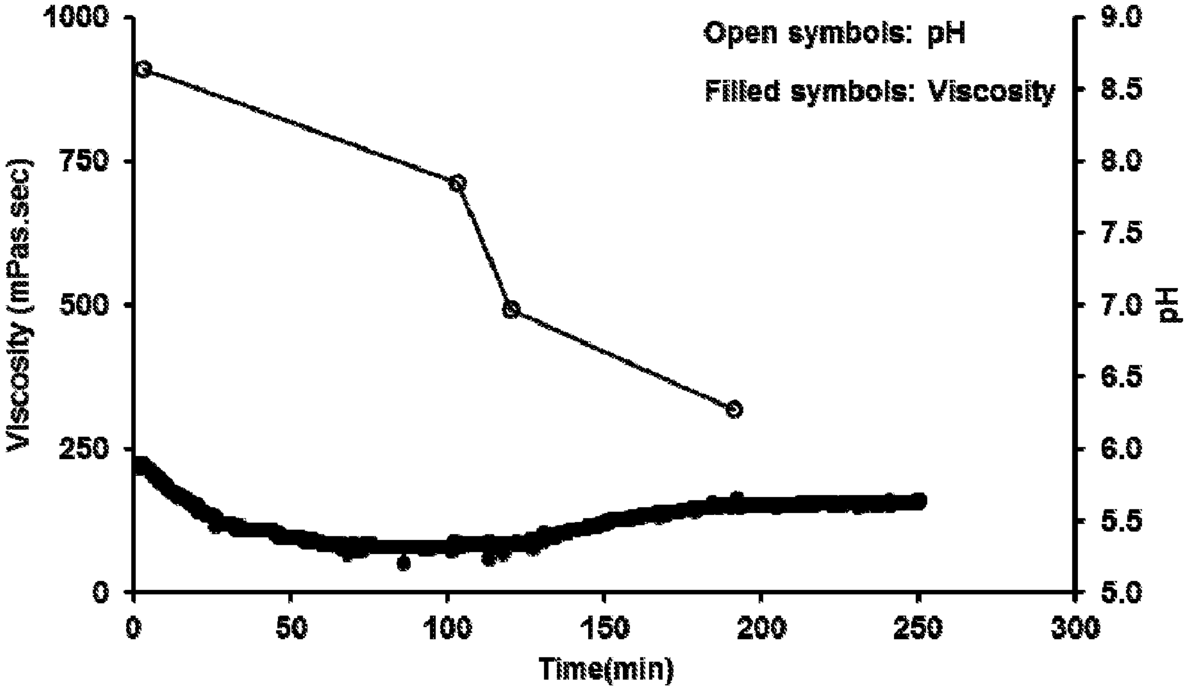
Open symbols: pH
Filled symbols: Viscosity
Viscosity (mPas.sec)
pH
Time(min)
1000
750
500
250
0
9.0
8.5
8.0
7.5
7.0
6.5
6.0
5.5
5.0
0
50
100
150
200
250
300

FIG. 11C

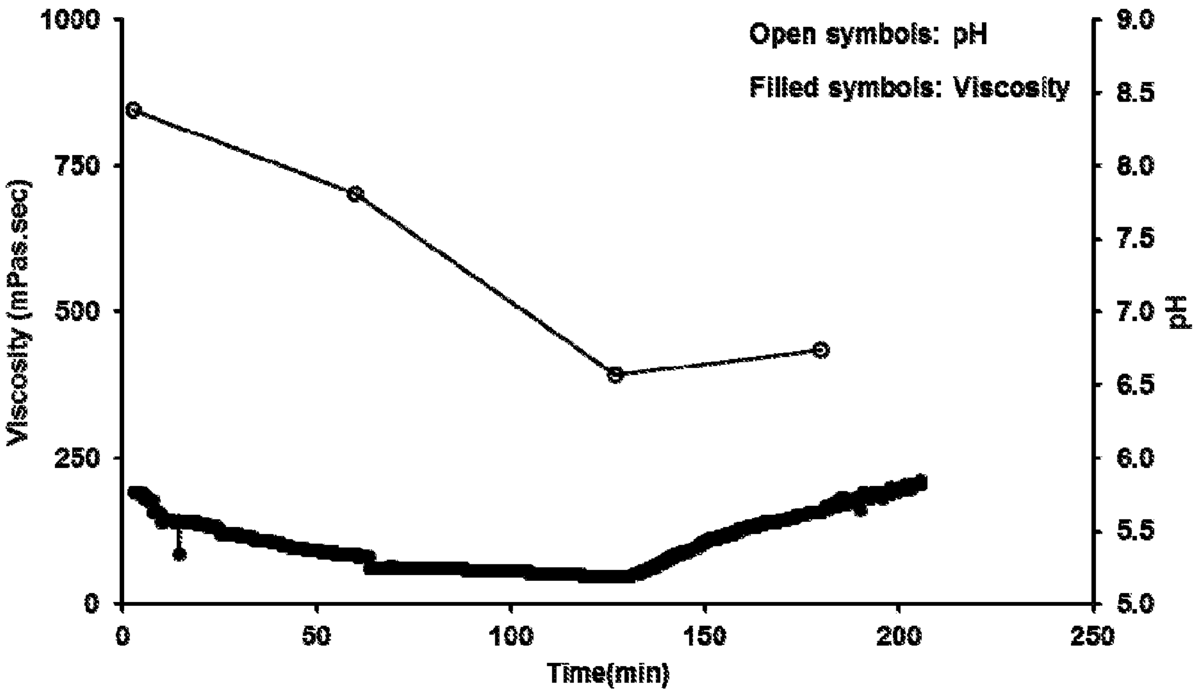
Open symbols: pH
Filled symbols: Viscosity
Viscosity (mPas.sec)
1000
750
500
250
0
pH
9.0
8.5
8.0
7.5
7.0
6.5
6.0
5.5
5.0
0
50
100
150
200
250
Time(min)

FIG. 12

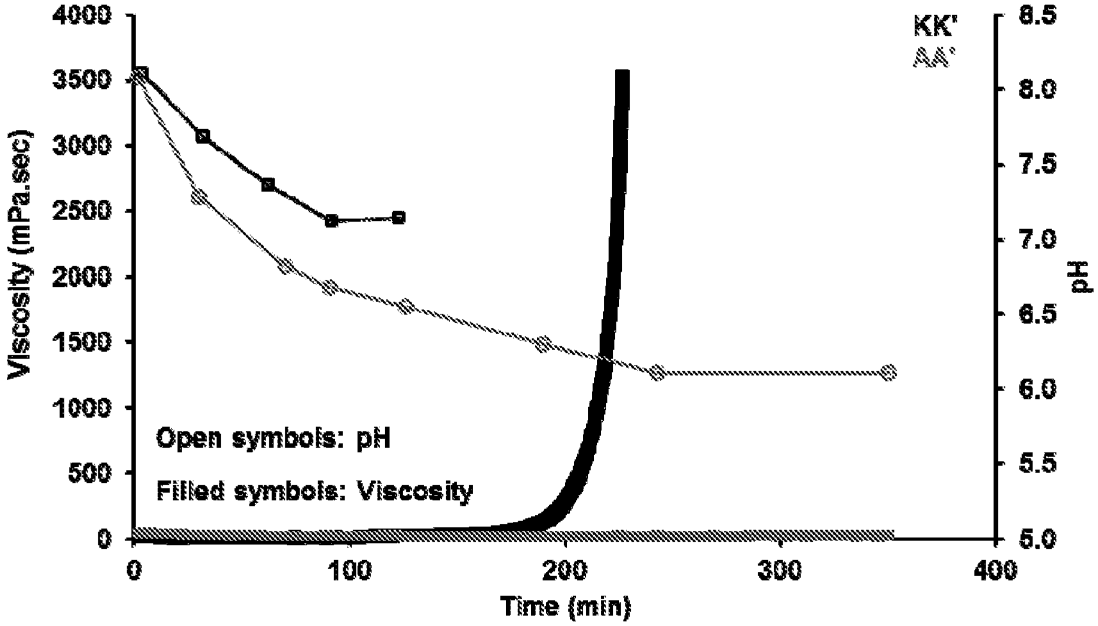
4000
3500
3000
2500
2000
1500
1000
500
0
Viscosity (mPa.sec)
0
100
200
300
400
Time (min)
8.5
8.0
7.5
7.0
6.5
6.0
5.5
5.0
pH
KK'
AA'
Open symbols: pH
Filled symbols: Viscosity

FIG. 13A

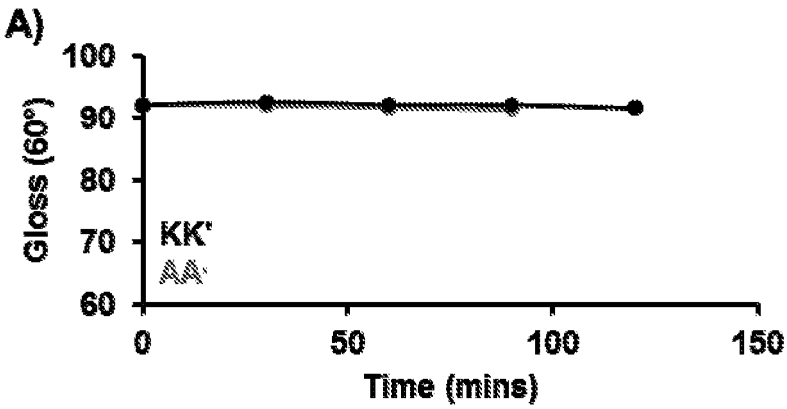


FIG. 13B

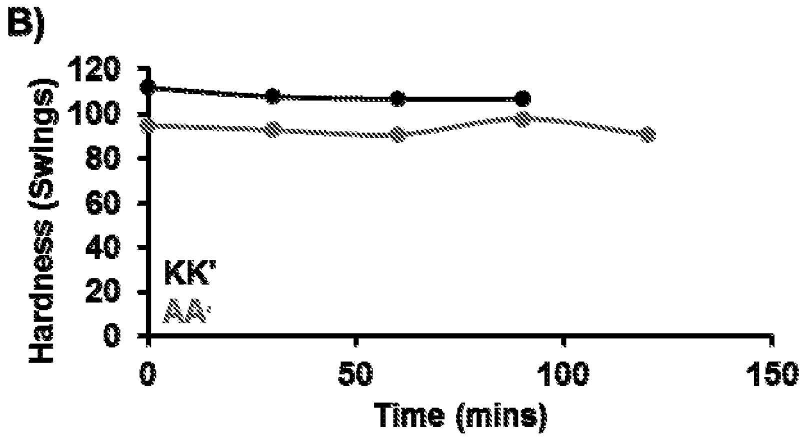


FIG. 13C

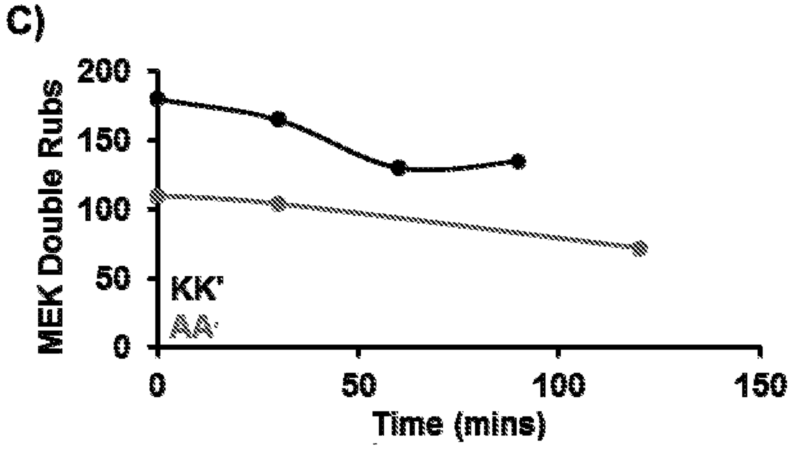

FIG. 14

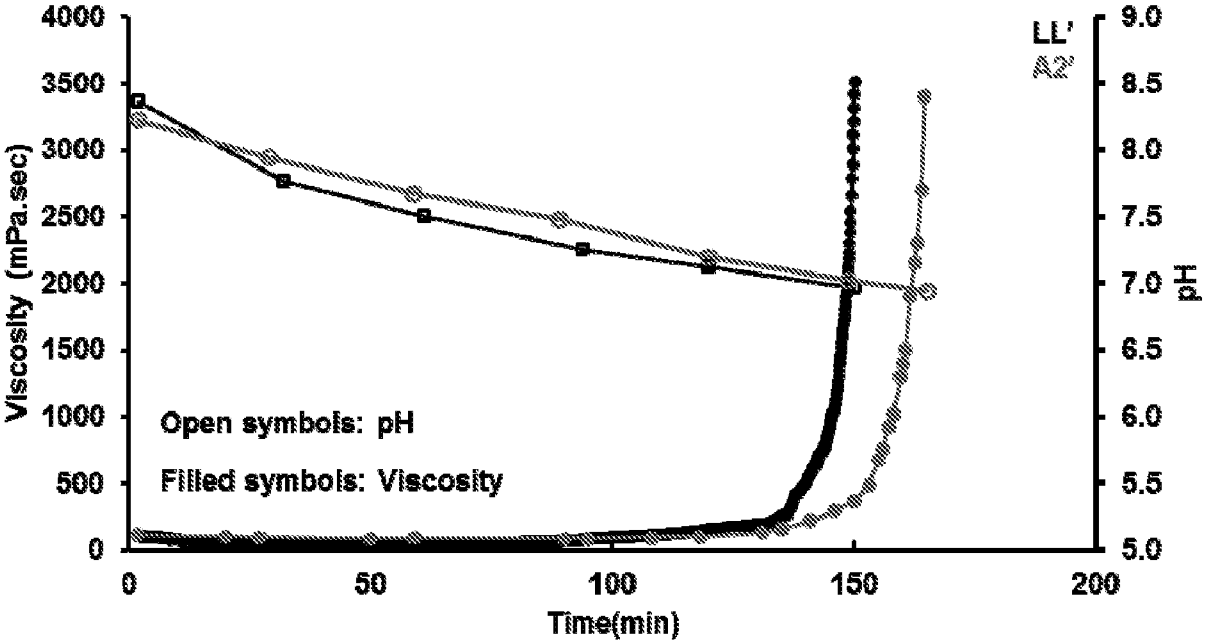
4000
3500
3000
2500
2000
1500
1000
500
0
Viscosity (mPa.sec)
0
50
100
150
200
Time(min)
9.0
8.5
8.0
7.5
7.0
6.5
6.0
5.5
5.0
pH
LL'
A2'
Open symbols: pH
Filled symbols: Viscosity

FIG. 15A

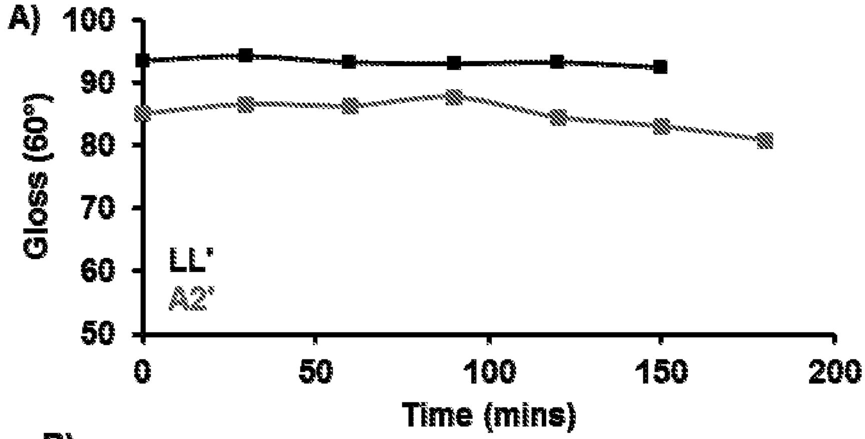


FIG. 15B

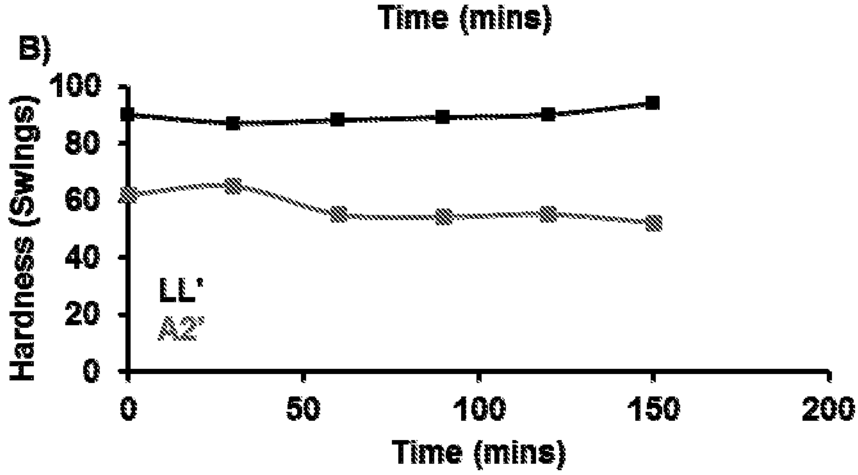


FIG. 15C

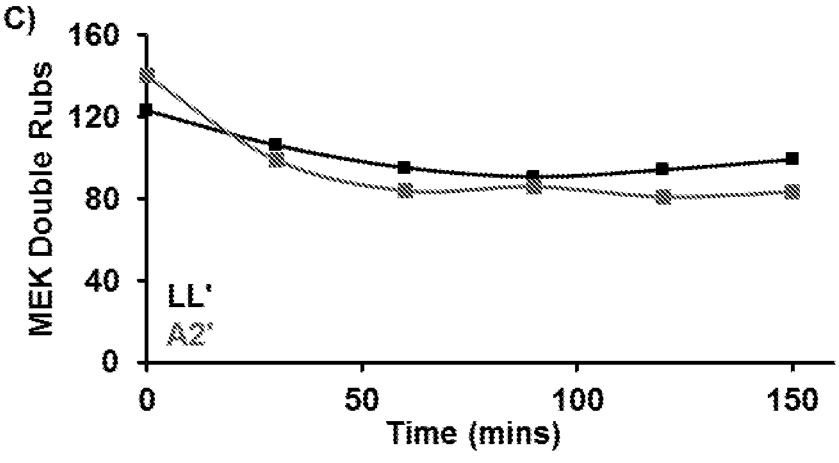

FIG. 16

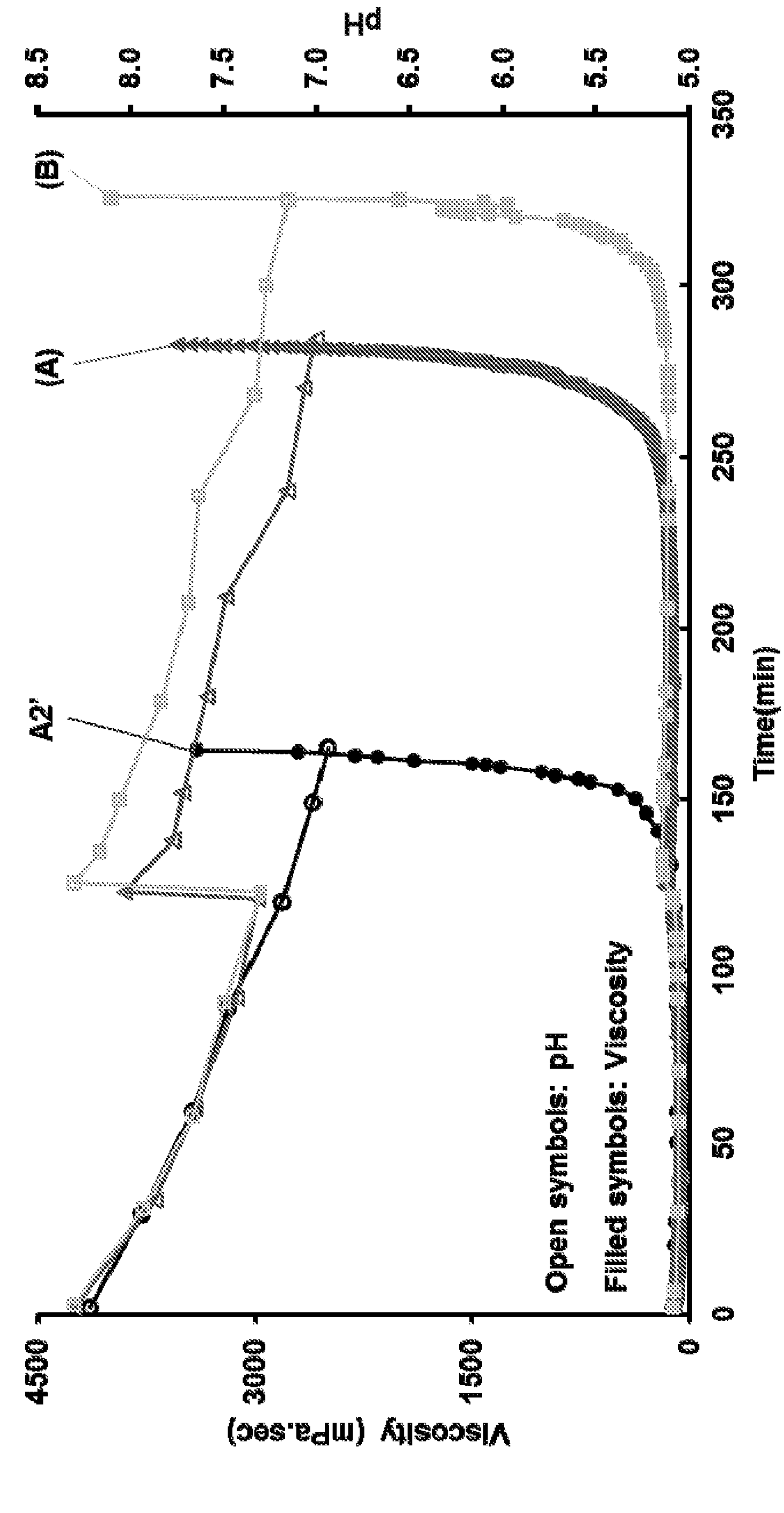
Viscosity (mPa.sec)
4500
3000
1500
0
Time(min)
0
50
100
150
200
250
300
350
pH
8.5
8.0
7.5
7.0
6.5
6.0
5.5
5.0
Open symbols: pH
Filled symbols: Viscosity
A2'
(A)
(B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4661540 A
- US 6194510 B
- US 4529787 A
- US 4546160 A
- US 6034157 A
- US 546160 A
- US 4414370 A